# EUROPÄISCHE PATENTSCHRIFT

(11) **EP 2 379 625 B1**
(45) Veröffentlichungstag und Bekanntmachung des Hinweises auf die Patenterteilung: **20.02.2013**
(21) Anmeldenummer: 09796952.1
(22) Anmeldetag: 10.12.2009
(51) Int. Cl.: C08J 5/18, F16L 55/162

(54) **UV- UND LICHT-SCHUTZFOLIE**
UV AND LIGHT PROTECTIVE FILM
FEUILLE DE PROTECTION CONTRE LES UV ET LA LUMIÈRE

(30) Priorität: 17.12.2008 DE 102008062407; 18.09.2009 DE 102009041841
(43) Veröffentlichungstag der Anmeldung: 26.10.2011
(73) Patentinhaber: Huhtamaki Forchheim Zweigniederlassung der Huhtamaki Deutschland GmbH & Co. KG, 91301 Forchheim (DE)
(72) Erfinder: STARK, Kurt, 91284 Neuhaus (DE); HUMMEL, Hendrik, 91301 Forchheim (DE); RÜBNER, Manfred, 91301 Forchheim (DE)
(74) Vertreter: Kutzenberger, Helga
(86) Internationale Anmeldenummer: PCT/EP2009/008845
(87) Internationale Veröffentlichungsnummer: WO 2010/075946

(56) Entgegenhaltungen:
- WO-A2-2007/147758
- CH-A5- 676 029
- US-A1- 2005 005 285
- DATABASE WPI Week 198045 Thomson Scientific, London, GB; AN 1980-79858C XP002571973 -& JP 55 124485 A (MITSUI TOATSU CHEM INC) 25. September 1980 (1980-09-25)
- DATABASE WPI Week 198324 Thomson Scientific, London, GB; AN 1983-57440K XP002571974 -& JP 58 076031 A (MITSUBISHI PETROCHEMICAL CO LTD) 9. Mai 1983 (1983-05-09)

## Beschreibung

Die vorliegende Erfindung betrifft eine zumindest kontakttransparente, UV-Strahlung und kurzwelliges, sichtbares Licht absorbierende und/oder reflektierende, einschichtige oder mehrschichtige Folie umfassend wenigstens eine Schicht basierend auf wenigstens einem gegebenenfalls modifizierten thermoplastischen Olefin-Homo-oder Copolymeren enthaltend eine Kombination aus wenigstens einem kurzwelliges, sichtbares Licht absorbierenden und/oder reflektierenden organischen oder anorganischen Farbpigment oder Farbstoff und aus wenigstens einer die UV-Strahlung absorbierenden und/oder reflektierenden, organischen oder anorganischen Verbindung, sowie die Verwendung dieser Folie als Schutzfolie gegen die Einwirkung von UV-Strahlung und kurzwelligem, sichtbaren Licht, vorzugsweise in Kanalsanierungssystemen, sowie ein entsprechendes Kanalsanierungsystem.

Aus dem Stand der Technik sind Schutzfolien bekannt, die zwar eine Schutzwirkung gegen UV-Strahlung aufweisen, jedoch blickdicht sind.

Aus verschiedenen Gründen ist es jedoch vorteilhaft, wenn derartige Schutzfolien transparent sind. So ist es bspw. im Fall von Lebensmittelverpackungen wünschenswert, dass die vor der Einwirkung von UV-Strahlung zu schützenden Verpackungsgüter von außen vom Käufer betrachtet werden können. In EP 1 138 479 B1 wird eine solche Schutzfolie beschrieben, die vor Einwirkung von UV-Strahlung bis zu einer Wellenlänge von < 350 nm schützt, indem sie Titandioxid als UV-Strahlung absorbierendes Pigment enthält. Das Titandioxid muss in einer bestimmten feindispersen Form vorliegen, um eine ausreichende Transparenz der Schutzfolie zu gewährleisten.

In DE 1 002 177 A1 wird eine thermoformbare, transparente Folie aus einem Thermoplasten beschrieben, bei der die UV-Strahlung bis zu einer Wellenlänge < 380 nm mit Hilfe von organischen oder metallorganischen Verbindungen vollständig absorbiert wird.

In WO 00/27914 wird eine transparente ein- oder mehrschichtige Folie beschrieben, die eine Schutzwirkung gegen UV-Strahlung in einem Wellenlängenbereich von 280-390 nm aufweist, indem sie eine UV-Strahlung absorbierende Kombination aus einer anorganischen und einer organischen Verbindung wie z. B. einer Kombination aus Zinkoxid oder Titandioxid und einem Benzotriazol aufweist.

Schutzfolien, die eine Schutzwirkung gegen UV-Strahlung aufweisen, werden u.a. bei der Sanierung von Kanälen und Kanalrohrleitungen im sogenannten Schlauchlining-Verfahren eingesetzt. Gemäß diesem Verfahren wird zunächst ein flexibler Schlauch bereitgestellt, der in das zu sanierende Rohr eingezogen wird. Dieser Schlauch umfasst zwei Schlauchfolien mit unterschiedlichem Durchmesser zwischen denen ein Trägermaterial, vorzugsweise Glasfasermaterial, eingebracht ist, das mit einem reaktiven Kunststoffharz getränkt ist. Nach dem Einbringen des Schlauches in das Kanalrohr und Aufblasen des Schlauches im Kanalrohr muss das Kunststoffharz zwischen den beiden Schlauchfolien ausgehärtet werden, um ein stabiles Rohr an der zu sanierenden Innenwand des Kanalrohres zu ergeben. Die Aushärtung kann durch Bestrahlung mit UV-Strahlung erreicht werden, wobei Photoinitiatoren in dem Kunststoffharz bei Einwirkung von UV-Strahlung den Polymerisations- bzw. Aushärtungsvorgang auslösen. Um eine ungewollte, vorzeitige Aushärtung des Kunststoffharzes vor dem Einbringen in das zu sanierende Kanalrohr zu verhindern, muss die außenliegende Schlauchfolie des Schlauches eine Schutzschicht aufweisen oder daraus bestehen, die eine vorzeitige Einwirkung von UV-Strahlung und damit eine vorzeitige Harzhärtung verhindert. Die innenliegende Schlauchfolie eines solchen Sanierungsschlauches muss dagegen UV-Strahlung durchlässig sein, um im aufgeblasenen Zustand den Aushärtungsvorgang zu ermöglichen. Schläuche aus herkömmlichen mehrschichtigen Schlauchfolien, die bei der Kanalsanierung gemäß Schlauchlining-Technik eingesetzt werden, weisen üblicherweise eine ausreichende Absorption der UV-Strahlung auf. Da jedoch die in den reaktiven Kunststoffharzen enthaltenen Photoinitiatoren auch bereits bei Einwirkung längerwelliger Strahlung wie bspw. von kurzwelligem, sichtbaren Licht aktiviert werden können, ist es notwendig, auch diese Gefahr einer vorzeitigen Aushärtung, insbesondere bei Lagerung zu unterbinden. Dies wurde u. a. durch die Verwendung undurchsichtiger Schlauchfolien versucht.

Dadurch ist jedoch keine Kontrolle einer gleichmäßigen Tränkung des Trägermaterials mit dem auszuhärtenden Kunststoffharz und damit keine Vermeidung von durch ungleichmäßige Tränkung verursachten Fehlstellen im sanierten Kanalrohr möglich.

Es besteht daher ein Bedarf an Schutzfolien, die zumindest eine Kontakttransparenz aufweisen, d.h. nicht blickdicht sind, aber trotzdem sowohl die Einwirkung von UV-Strahlung als auch von kurzwelligem, sichtbaren Licht unterbinden.

Eine Aufgabe der vorliegenden Erfindung war es daher, eine Schutzfolie zur Verfügung zu stellen, die zumindest kontakttransparent ist, aber trotzdem die Einwirkung von UV-Strahlung und von kurzwelligem, sichtbaren Licht verhindert.

Diese Aufgabe wird gelöst durch die Bereitstellung der erfindungsgemäßen, zumindest kontakttransparenten, UV-Strahlung und kurzwelliges, sichtbares Licht absorbierenden und/oder reflektierenden, einschichtigen oder mehrschichtigen Folie umfassend wenigstens eine Schicht basierend auf wenigstens einem gegebenenfalls modifizierten, thermoplastischen Olefin-Homo-oder Copolymeren enthaltend eine Kombination aus wenigstens einem kurzwelliges, sichtbares Licht absorbierenden und/oder reflektierenden organischen oder anorganischen Farbpigment oder Farbstoff und aus wenigstens einer die UV-Strahlung absorbierenden und/oder reflektier enden, organischen oder anorganischen Verbindung.

Unter dem Begriff "kontakttransparent" wird im Sinne dieser Erfindung verstanden, dass die erfindungsgemäße Folie zumindest so transparent ist, dass die Kontrolle einer gleichmäßigen Tränkung des Trägermaterials mit dem auszuhärtenden Kunststoffharz möglich ist. Dies beruht auf der Prüfung der Helligkeit des getränkten Trägermaterials. Die Bestimmung der Kontakttransparenz wird mit der nachstehend in den Beispielen beschriebenen Methode durchgeführt.

Unter dem Begriff "UV-Strahlung" wird im Sinne dieser Erfindung elektromagnetische Strahlung in einem Wellenlängenbereich von 200 bis 400 nm verstanden.

Unter dem Begriff "kurzwelliges, sichtbares Licht" wird im Sinne dieser Erfindung elektromagnetische Strahlung in einem Wellenlängenbereich von 400 bis 500 nm, vorzugsweise von 400 bis 450 nm verstanden.

Die erfindungsgemäße Folie enthält vorzugsweise wenigstens ein organisches oder anorganisches Farbpigment oder wenigstens einen organischen oder anorganischen Farbstoff ausgewählt aus der Gruppe umfassend Carbonyl-Farbstoffe, vorzugsweise Chinon-Farbstoffe, Indigo-Farbstoffe und Chinacridone, Azo-Verbindungen, Cyanin-Verbindungen, vorzugsweise Triphenylmethan-Verbindungen, Azomethine, Isoindoline, Dioxazine, Metalloxide, Übergangsmetalloxide, Metalloxidhydrate und Übergangsmetalloxidhydrate. Besonders bevorzugt werden von diesen Farbstoffgruppen oder Farbpigmenten die gelben Farbstoffgruppen oder Farbpigmente ausgewählt.

Vorzugsweise liegt ein organisches, gelbes Farbpigment oder ein organischer, gelber Farbstoff ausgewählt aus der Gruppe umfassend Benzimidazol-Derivate, Benzotriazol-Derivate, 1,4-Chinon-Derivate, 1,4-Naphthochinon-Derivate, 9,10-Anthrachinon-Derivate, Phenylazophenol-Derivate, jeweils in Form der freien Verbindungen, in Form von Tautomeren oder der Salze von Säuren oder Basen oder der Solvate, vorzugsweise der Hydrate vor. Vorzugsweise liegt ein anorganisches, gelbes Farbpigment oder ein anorganischer, gelber Farbstoff ausgewählt aus der Gruppe umfassend Übergangsmetalloxide und Übergangsmetalloxidhydrate vor. Besonders bevorzugt ist ein gelbes Farbpigment oder ein gelber Farbstoff ausgewählt aus der Gruppe umfassend 4-Phenylazophenol, 2-(2'- Methyl)phenylazo-4-methylphenol, N-(4- Phenylazo)phenyldiethanolamin, Benzotriazole, Benzimidazolon, Eisenoxid und Eisenoxidhydrat, ganz besonders bevorzugt ist Benzimidazolon.

Vorzugsweise absorbiert und/oder reflektiert das organische oder anorganische Farbpigment oder der organische oder anorganische Farbstoff kurzweiliges, sichtbares Licht im Wellenbereich von 400 bis 500 nm, besonders bevorzugt im Wellenbereich von 400 bis 450 nm, vorzugsweise jeweils zu mehr als 90 %.

In einer bevorzugten Ausführungsform enthält die erfindungsgemäße Folie wenigstens eine organische oder anorganische Verbindung ausgewählt aus der Gruppe umfassend Metalloxide, Übergangsmetalloxide, Metalloxidhydrate, Übergangsmetalloxidhydrate, Phosphite, Benzophenone, Anthranilate, Salicylate, Dibenzoylmethane-Derivate, p-Aminobenzosäure-Derivate, Zimtsäure-Derivate (Phenylacrylsäure - Derivate), Benzimidazol-Derivate, Benzotriazol-Derivate, Cyanoacrylate, Benzotriazol-Derivate, β-β'-Divinylacrylate, Alkyl-α-cyano-β-β'-divinylacrylate, 1,3,5-Triazin-Verbindungen und sterisch gehinderte Amine, jeweils in Form der freien Verbindungen, in Form ihrer Tautomeren oder jeweils ihrer Salze von Säuren oder Basen als UV-Strahlung absorbierende und/oder reflektierende Verbindung. Derartige Verbindungen sind teilweise marktgeführte Produkte, wie z. B. Uvinule® der BASF AG.

Unter dem Begriff "sterisch gehinderte Amine" werden Verbindungen verstanden, bei denen an wenigstens ein dreibindiges Stickstoffatom ein oder mehrere raumfüllende, organische Reste gebunden sind. Vorzugsweise handelt es sich um aromatische oder aliphatische, azyklische oder zyklische, sekundäre und tertiäre Amine wie N,N'-disubstituierte p-Phenylendiamine oder substituierte (Amino)-Piperidine.

Vorzugsweise liegt als UV-Strahlung absorbierende und/oder reflektierende, organische oder anorganische Verbindung wenigstens eine Verbindung ausgewählt aus der Gruppe umfassend Metall- und Übergangsmetalloxide und Verbindungen der nachstehenden allgemeinen Strukturformeln a bis u vor: 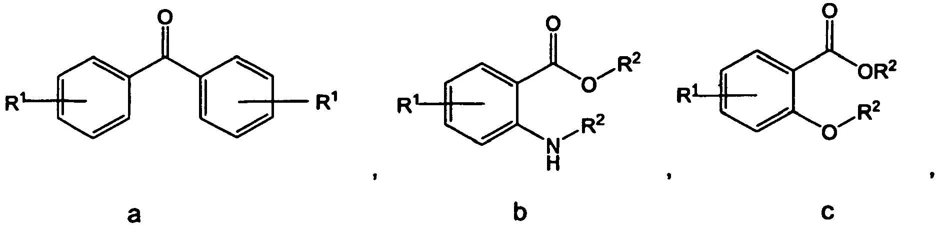 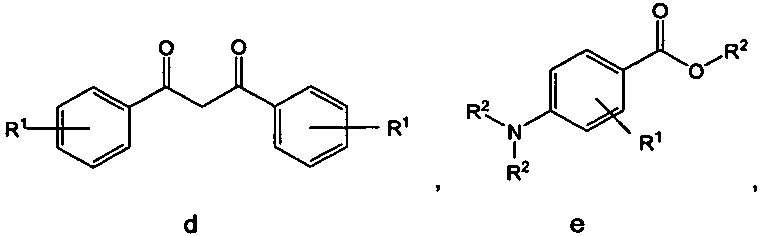 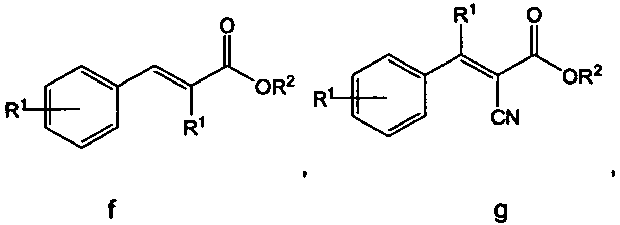 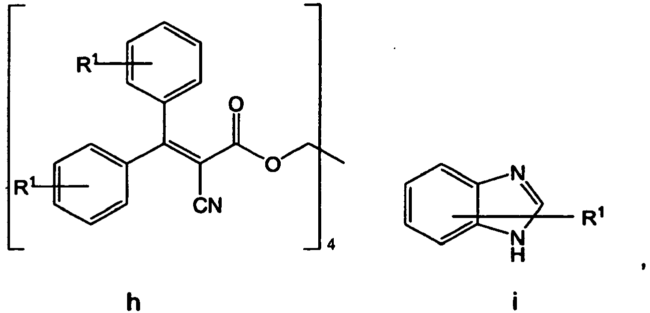 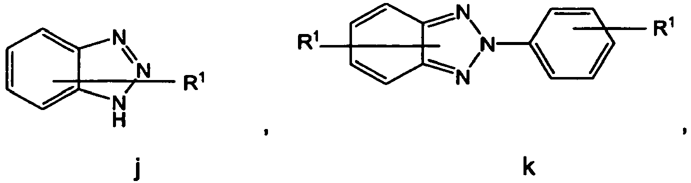 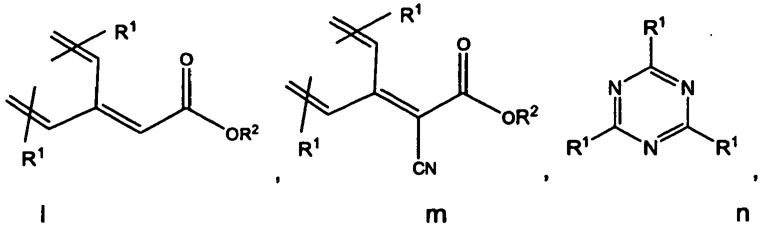 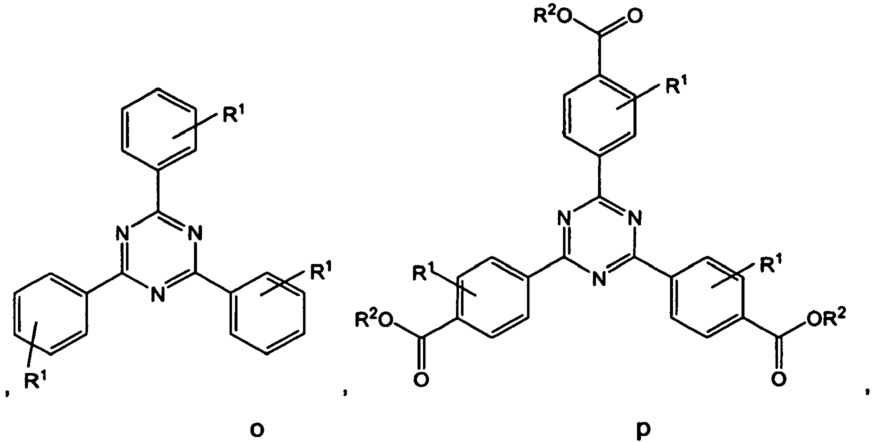 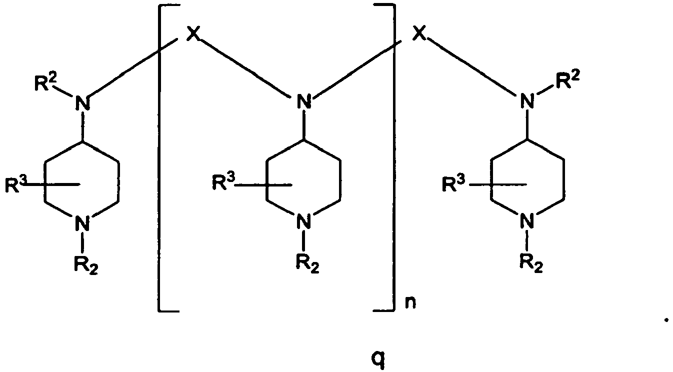 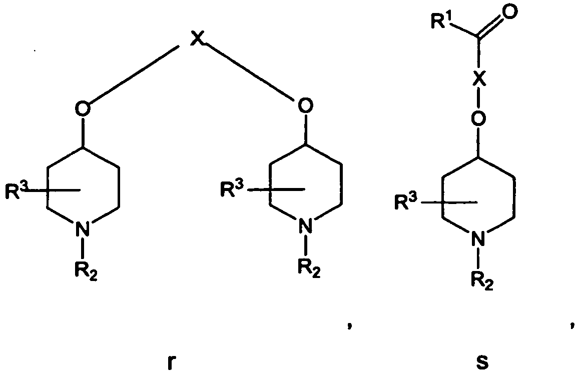 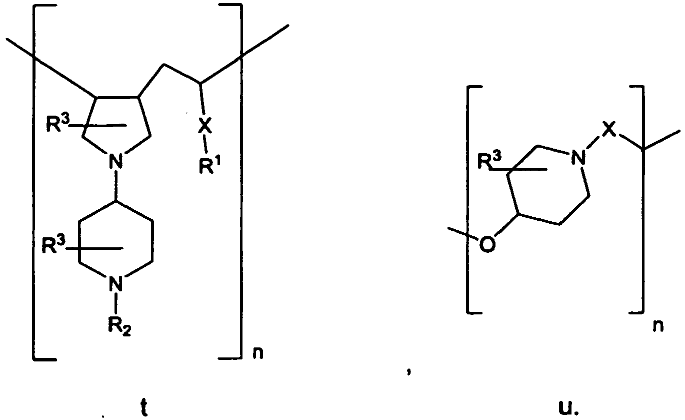 R¹ in denen jeweils für einen oder mehrere, z.B. zwei, drei oder vier Reste jeweils unabhängig voneinander ausgewählt aus der Gruppe umfassend Wasserstoff; OH; Halogen; NH₂; CN; C(=O)H; C(=O)OH; SO₃H; O-C₁₋₁₀-Alkyl, NH(C₁₋₁₀-Alkyl), N(C₁₋₁₀-Alkyl)₂, C₁₋₁₀-Alkyl, -C₁₋₁₀-Alkyl-O-C₁₋₁₀-Alkyl-, jeweils verzweigt oder unverzweigt, gesättigt oder ungesättigt, unsubstituiert oder einfach oder mehrfach substituiert mit OH, Halogen, =O, C(=O)H, C(=O)OH, Phenyl, NH₂, C(=O)-C₁₋₁₀-Alkyl, C(=O)-O-C₁₋₁₀-Alkyl, O-C₁₋₁₀-Alkyl, O-C(=O)-C₁₋₁₀-Alkyl, jeweils verzweigt oder unverzweigt, gesättigt oder ungesättigt; Phenyl, Menthyl, Homomenthyl, Benzyl, Cyclohexyl, jeweils unsubstituiert oder einfach oder mehrfach substituiert mit OH, Halogen, C(=O)H, C(=O)OH, NH₂, C(=O)-C₁₋₁₀-Alkyl, C(=O)-O-C₁₋₁₀-Alkyl, O-C₁₋₁₀-Alkyl, O-C(=O)-C₁₋₁₀-Alkyl steht;
R² jeweils für einen oder mehrere, z.B. zwei, drei oder vier Reste jeweils unabhängig voneinander ausgewählt aus der Gruppe umfassend Wasserstoff, C₁₋₈-Alkyl, jeweils verzweigt oder unverzweigt, gesättigt oder ungesättigt, unsubstituiert oder einfach oder mehrfach substituiert mit OH, Halogen, =O, NH₂, C(=O)H; C(=O)OH; CN; C(=O)-C₁₋₁₀-Alkyl, C(=O)-O-C₁₋₁₀-Alkyl, O-C₁₋₁₀-Alkyl, O-C(=O)-C₁₋₁₀-Alkyl, jeweils verzweigt oder unverzweigt, gesättigt oder ungesättigt; Phenyl, Menthyl, Homomenthyl, Benzyl, Cyclohexyl, jeweils unsubstituiert oder einfach oder mehrfach substituiert mit OH, Halogen, C(=O)H; C(=O)OH; NH₂, C(=O)-C₁₋₁₀-Alkyl, C(=O)-O-C₁₋₁₀-Alkyl, O-C₁₋₁₀-Alkyl, O-C(=O)-C₁₋₁₀-Alkyl steht;
R³ jeweils für einen oder mehrere, z.B. zwei, drei, vier, fünf oder sechs Reste jeweils unabhängig voneinander ausgewählt aus der Gruppe umfassend Wasserstoff; OH; NH₂; CN; C(=O)H; C(=O)OH; =O; SO₃H; O-C₁₋₁₀-Alkyl, NH(C₁₋₁₀-Alkyl), N(C₁₋₁₀-Alkyl)₂, C₁₋₁₀-Alkyl, -C₁₋₁₀-Alkyl-O-C₁₋₁₀-Alkyl-, jeweils verzweigt oder unverzweigt, gesättigt oder ungesättigt, unsubstituiert oder einfach oder mehrfach substituiert mit OH, Halogen, =O, Epoxy, NH₂, Phenyl, C(=O)-C₁₋₈-Alkyl, C(=O)-O-C₁₋₁₀-Alkyl, O-C₁₋₁₀-Alkyl, O-C(=O)-C₁₋₁₀-Alkyl, jeweils verzweigt oder unverzweigt, gesättigt oder ungesättigt; Phenyl, Menthyl, Homomenthyl, Benzyl, Cyclohexyl, jeweils unsubstituiert oder einfach oder mehrfach substituiert mit OH, Halogen, C(=O)H; C(=O)OH; NH₂, C(=O)-C₁₋₁₀-Alkyl, C(=O)-O-C₁₋₁₀-Alkyl, O-C₁₋₁₀-Alkyl, O-C(=O)-C₁₋₁₀-Alkyl steht;
X für C₁₋₂₀-Alkyl, verzweigt oder unverzweigt, gesättigt oder ungesättigt, unsubstituiert oder einfach oder mehrfach substituiert mit Substituenten unabhängig voneinander ausgewählt aus der Gruppe umfassend H; Halogen; OH; =O; Epoxy; NH₂; C(=O)H; C(=O)OH; CN; C(=O)-C₁₋₁₀-Alkyl, C(=O)-O-C₁₋₁₀-Alkyl, O-C₁₋₁₀-Alkyl, O-C(=O)-C₁₋₁₀-Alkyl, jeweils verzweigt oder unverzweigt, gesättigt oder ungesättigt steht, wobei ein oder mehrere, z.B. ein, zwei oder drei C-Atome des C₁₋₂₀-Alkyls ggf. durch ein oder mehrere, z.B. ein, zwei oder drei Heteroatome unabhängig voneinander ausgewählt aus der Gruppe umfassend N, O, S, NH oder N(C₁₋₈-Alkyl) ersetzt sein können;
n für 0 bis 200, vorzugsweise für 0 bis 100, besonders bevorzugt für 0 bis 20, ganz besonders bevorzugt für 0 bis 10 steht;

Die Ausdrücke "C₁₋₁₀-Alkyl" und "C₁₋₂₀-Alkyl" umfassen im Sinne dieser Erfindung acyclische, gesättigte oder ungesättigte Kohlenwasserstoffreste, die verzweigt oder unverzweigt sowie unsubstituiert oder ein- oder mehrfach substituiert sein können, mit 1 bis 8 bzw. 1 bis 20 C-Atomen, d.h. C₁₋₁₀-Alkanyle, C₂₋₁₀-Alkenyle und C₂₋₁₀-Alkinyle bzw. C₁₋₂₀-Alkanyle, C₂₋₂₀-Alkenyle und C₂₋₂₀-Alkinyle. Dabei weisen Alkenyle mindestens eine C-C-Doppelbindung und Alkinyle mindestens eine C-C-Dreifachbindung auf.

Bevorzugt ist Alkyl aus der Gruppe ausgewählt umfassend, die Methyl, Ethyl, n-Propyl, 2-Propyl, n-Butyl, iso-Butyl, sec.-Butyl, tert.-Butyl, n-Pentyl, iso-Pentyl, neo-Pentyl, n-Hexyl, n-Heptyl, n-Octyl, n-Nonyl, n-Decyl, Ethylenyl (Vinyl), Ethinyl, Propenyl (-CH₂CH=CH₂, -CH=CH-CH₃, -C(=CH₂)-CH₃), Propinyl (-CH-C≡CH, -C≡C-CH₃), Butenyl, Butinyl, Pentenyl, Pentinyl, Hexenyl und Hexinyl, Heptenyl, Heptinyl, Octenyl und Octinyl.

Besonders bevorzugt wird als UV-Strahlung absorbierende und/oder reflektierende, organische oder anorganische Verbindungen wenigstens eine Verbindung aus der Gruppe umfassend Zinkoxid, Titandioxid, 2-Ethoxy-ethyl-p-methoxycinnamat, Diethanolamin-p-methoxycinnamat, Octyl-p-methoxycinnamat, 2-Ethylhexyl-2-cyano-3,3-diphenylacrylat, Kaliumcinnamat, Propyl-4-methoxy-cinnamat, Amyl-4-methoxycinnamat, α-Cyano-4-methoxyzimtsäure bzw. der entsprechende Hexylester, Cyclohexyl-4-methoxycinnamat, Glyceryl-p-amino-benzoat, Amyl-p-dimethylaminobenzoat, Ethyl-4-bis(hydroxypropyl)-aminobenzoat, Octyl-p-dimethylaminobenzoat, Ethoxylierte-4-Aminobenzosäure, Octylsalicylat, Triethanolaminsalicylat, Salze der Salicylsäure, 4-Isopropylbenzylsalicylat, 2-Ethylhexyl-2-(4-phenylbenzoyl)benzoat, Homomenthylsalicylat, , 2-Hydroxy-4-methoxybenzophenon, 2,4,6-Trianilino-(p-carbo-2-ethylhexyloxy)-1,3,5-triazin, 2-Phenylbenzimidazol-5-sulfonsäure, 1-(4-tert-Butylphenyl)-3-(4-methoxyphenyl)propan-1,3-dion, p-Cumenyl-3-phenylpropan-1,3-dion, 1,3-Bis(4-Methoxyphenyl)propan-1,3-dion, Menthylanthranilat, Homomenthyl-N-acetylanthranilat, 2-Hydroxy-4-octylbenzophenon (Uvinul® 3008, Uvinul® 3008 FL), 6-*tert*-Butyl-2-(5-chlor-2H-benzotriazol-2-yl)-4-methylphenol (Uvinul® 3026, Uvinul® 3026 GR), 2,4-Di-*tert-*butyl-6-(5-chlor-2H-benzotriazol-2-yl)-phenol (Uvinul® 3027), 2-(2H-Benzotriazol-2-yl)-4,6-di-*tert*-pentylphenol (Uvinul® 3028, Uvinul® 3028 GR), 2-(2H-Benzotriazol-2-yl)-4-(1,1,3,3-tetramethylbutyl)-phenol (Uvinul® 3029, Uvinul® 3029 GR), 1,3-Bis-[(2'-cyano-3',3'-diphenylacryloyl)oxy]-2,2-bis-{[(2'-cyano-3',3'-diphenylacryloyl)oxy]methyl}-propan (Uvinul® 3030, Uvinul® 3030 GR), 2-(2H-Benzotriazol-2-yl)-4-methylphenol (Uvinul® 3033 P), 2-(2H-Benzotriazol-2-yl)-4,6-bis(1-methyl-1-phenylethyl)phenol (Uvinul® 3034), Ethyl-2-cyano-3,3-diphenylacrylat (Uvinul® 3035), (2-Ethylhexyl)-2-cyano-3,3-diphenylacrylat (Uvinul® 3039), N,N'-Bisformyl-N,N'-bis-(2,2,6,6-tetramethyl-4-piperidinyl)-hexamethylendiamin (Uvinul® 4050 H), Bis-(2,2,6,6-tetramethyl-4-piperidyl)-sebacat (Uvinul® 4077 H, Uvinul® 4077 GR), Bis-(1,2,2,6,6-pentamethyl-4-piperidyl)-sebacat, Methyl-(1,2,2,6,6-pentamethyl-4-piperidyl)-sebacat (Uvinul® 4092 H), 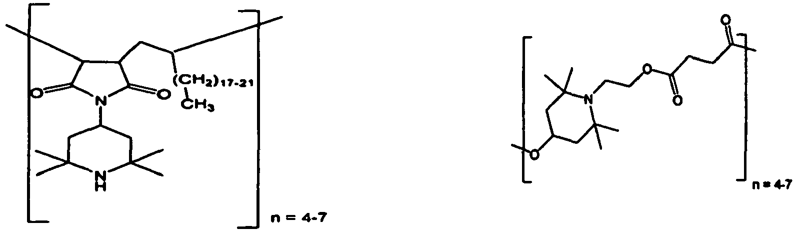 (Uvinul® 5050 H) und (Uvinul® 5062 H, Uvinul® 5062 GR) eingesetzt.

Vorzugsweise absorbiert und/oder reflektiert die organische oder anorganische Verbindung UV-Strahlung in einem Wellenlängenbereich von 200 bis 400 nm, besonders bevorzugt von 300 bis 400 nm, vorzugsweise jeweils zu mehr als 90 %.

Vorzugsweise enthält die erfindungsgemäße Folie 0,05 bis 20 Gew.%, besonders bevorzugt 0,1 bis 5 Gew.%, ganz besonders bevorzugt 0,1 bis 2 Gew.%, jeweils bezogen auf das Gesamtgewicht der Folie, der Kombination aus wenigstens einem organischen oder anorganischen Farbpigment oder Farbstoff und wenigstens einer organischen oder anorganischen Verbindung.

Vorzugsweise enthält die erfindungsgemäße Folie 0,05 bis 10 Gew.%, besonders bevorzugt 0,1 bis 3 Gew.%, bezogen auf das Gesamtgewicht der Folie, des organischen oder anorganischen Farbpigments oder Farbstoff.

Vorzugsweise enthält die erfindungsgemäße Folie 0,05 bis 10 Gew.%, besonders bevorzugt 0,1 bis 2 Gew.%, bezogen auf das Gesamtgewicht der Folie, der organischen oder anorganischen Verbindung.

Vorzugsweise ist jede Komponente der Kombination bei Temperaturen bis zu 300 °C stabil.

Die erfindungsgemäße Folie ist einschichtig oder mehrschichtig, vorzugsweise mehrschichtig. Vorzugsweise ist die erfindungsgemäße Folie nicht schrumpffähig.

Vorzugsweise umfasst die erfindungsgemäße Folie wenigstens eine Barriereschicht, besonders bevorzugt eine Sauerstoffbarriereschicht, Wasserdampfbarrierschicht oder eine Ölbarriereschicht.

Zur Herstellung der Barriereschicht eignet sich bevorzugt wenigstens ein Polyamid (PA), Ethylen-Vinylalkohol-Copolymer (EVOH), Polyvinylalkohol (PVOH), zyklisches Olefin-Copolymer (COC), Polyvinylidenchlorid (PVdC) oder eine Mischung aus wenigstens zwei der genannten Polymere, besonders bevorzugt wenigstens ein Polyamid.

Die zur Herstellung der Barriereschicht eingesetzten Polyamide (PA) sind vorzugsweise thermoplastische aliphatische, teilaromatische oder aromatische Polyamide. Entsprechend können die zur Herstellung dieser Polyamide eingesetzten Diamine entweder aliphatische Diamine mit 2-10 Kohlenstoffatomen wie z.B. Hexamethylendiamin oder aromatische Diamine mit 6-10 Kohlenstoffatomen sein wie z. B. p-Phenylendiamin und die zur Herstellung dieser Polyamide eingesetzten Dicarbonsäuren aliphatische oder aromatische Dicarbonsäuren mit 6-14 Kohlenstoffatomen wie z.B. Adipinsäure, Terephthalsäure oder Isoterephthalsäure sein. Weiterhin können die Polyamide aus Lactamen mit 4-10 Kohlenstoffatomen wie z.B. ε-Caprolactam hergestellt werden. Erfindungsgemäß verwendete Polyamide sind z.B. PA 6, PA 12, PA 66, PA 61, PA 6T und/oder Mischungen aus wenigstens zwei der genannten Polymere.

Die zur Herstellung der Barriereschicht eingesetzten Polyvinylalhohole werden durch vollständige oder unvollständige Hydrolyse von entsprechenden Polyvinylacetaten (PVA) gewonnen und umfassen somit sowohl teilverseifte Polyvinylacetate, die einen Verseifungsgrad von 50 bis 98 mol-% aufweisen, als auch vollverseifte Polyvinylacetate mit einem Verseifungsgrad ≥ 98 %.

Die zur Herstellung der Barriereschicht eingesetzten Ethylen-Vinylalkohol-Copolymere (EVOH) werden durch vollständige oder unvollständige Hydrolyse von entsprechenden ethylenhaltigen Polyvinylacetaten (EVAc) gewonnen und umfassen vor allem vollverseifte ethylenhaltige Polyvinylacetate mit einem Verseifungsgrad ≥ 98 %.

Die zur Herstellung der Barriereschicht eingesetzten cyclischen Olefin-Copolymere (COC) können auch Copolymere von α,ß-ungesättigten cyclischen Olefinen mit 4-10 Kohlenstoffatomen wie z.B. Norbomen und thermoplastischen α,ß-ungesättigten Olefinen wie Ethylen oder Proplyen sein.

Vorzugsweise basiert wenigstens eine Oberflächenschicht der erfindungsgemäßen Folie auf wenigstens einem thermoplastischen Olefin-Homo-oder Copolymeren, das vorzugsweise siegelfähig ist.

Olefin-Homo-oder Copolymere im Sinne dieser Erfindung sind thermoplastische Polymere von α,ß-ungesättigten Olefinen mit 2-6 Kohlenstoffatomen wie z.B. Polyethylen (PE, insbesondere LDPE oder HDPE), Polypropylen (PP), Polybutylen (PB), Polyisobutylen (PI) oder Mischungen aus wenigstens zwei der genannten Polymere. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann.

Gegebenenfalls können die genannten Olefin Homo- oder Copolymere mit wenigstens einer organischen Säure oder wenigstens einem organischen Säureanhydrid, vorzugsweise mit einen cyclischen, organischen Säureanhydrid, besonders bevorzugt mit Maleinsäureanhydrid, modifiziert sein und so als Material für eine Haftvermittlerschicht in einer erfindungsgemäßen Mehrschichtfolie dienen.

So kann in einer bevorzugten Ausführungsform zwischen einer Oberflächenschicht und der Barriereschicht eine Haftvermittlerschicht, vorzugsweise enthaltend wenigstens ein modifiziertes Polyolefin, angeordnet sein.

Als modifizierte Polyolefine sind ein thermoplastische Polymere von einem α,ß-ungesättigten Olefinen mit 2-6 Kohlenstoffatomen wie z.B. Polyethylen (PE, insbesondere LDPE oder HDPE), Polypropylen (PP), Polybutylen (PB), Polyisobutylen (PI) oder eine Mischung aus wenigstens zwei der genannten Polymere zu verstehen, welche(s) mit wenigstens einer organischen Säure oder wenigstens einem organischen Säureanhydrid modifiziert sind. Bevorzugt ist als ein modifiziertes Polyolefin ein mit einem zyklischen, organischen Säureanhydrid modifiziertes Polyethylen oder Polypropylen, besonders bevorzugt ein mit Maleinsäureanhydrid modifiziertes Polyethylen oder Polypropylen.

Vorzugsweise besteht die Haftvermittlerschicht aus einem modifizierten Polyolefin, das besonders bevorzugt mit Maleinsäureanhydrid gepfropft ist.

In einer bevorzugten Ausführungsform basiert jede der Oberflächenschichten der erfindungsgemäßen Mehrschichtfolie auf wenigstens einem vorzugsweise siegelfähigen Olefin-Homo oder -Copolymer und ist jeweils über eine vorstehend beschriebene Haftvermittlerschicht mit der Barriereschicht verbunden.

In einer bevorzugten Ausführungsform enthält wenigstens eine der innenliegenden Schichten einer erfindungsgemäßen Mehrschichtfolie die die schädliche Strahlung absorbierende und/oder reflektierende Kombination aus wenigstens einem organischen oder anorganischen Farbpigment oder Farbstoff und wenigstens einer organischen oder anorganischen Verbindung

Vorzugsweise liegen die Komponenten der Kombination in derselben Schicht einer erfindungsgemäßen Mehrschichtfolie, besonders bevorzugt in einer Haftvermittlerschicht vor.

Vorzugsweise kann jede der Haftvermittlerschichten der erfindungsgemäßen Mehrschichtfolie die schädliche Strahlung absorbierende und/oder reflektierende Kombination aus wenigstens einem organischen oder anorganischen Farbpigment oder Farbstoff und wenigstens einer organischen oder anorganischen Verbindung enthalten.

In einer weiteren bevorzugten Ausführungsform liegen die Komponenten der Kombination in unterschiedlichen Schichten einer erfindungsgemäßen Mehrschichtfolie vor.

Vorzugsweise liegen das Farbpigment oder der Farbstoff in wenigstens einer Oberflächenschicht und die organische oder anorganische Verbindung in wenigstens einer innenliegenden Schicht der erfindungsgemäßen Mehrschichtfolie vor.

Bevorzugt kann jede der Haftvermittlerschichten der erfindungsgemäßen Mehrschichtfolie wenigstens eine organische oder anorganische Verbindung enthalten.

In einer weiteren bevorzugten Ausführungsform kann jede der Schichten einer erfindungsgemäßen Mehrschichtfolie mit Ausnahme der Barriereschicht wenigstens ein organisches oder anorganisches Farbpigment oder Farbstoff enthalten.

Vorzugsweise kann die erfindungsgemäße Folie in Bezug auf eine zentrale Verbindungsschicht, vorzugsweise eine Klebstoffschicht symmetrisch angeordnet sein.

Vorzugsweise weist die erfindungsgemäße Folie eine Schichtdicke von 20 bis 2000 µm, besonders bevorzugt von 50 bis 1500 µm, ganz besonders bevorzugt von 100 bis 1000 µm, insbesondere von 150 bis 500 µm auf.

Die Herstellung der erfindungsgemäßen Folie kann nach beliebigen Herstellungsverfahren wie z.B. durch Laminierung, Extrusion oder vorzugsweise durch Co-Extrusion erfolgen.

Dabei können sowohl einzelne als auch sämtliche Schichten einer erfindungsgemäßen Mehrschichtfolie durch Extrusion, insbesondere durch Blasfolien-Extrusion und/oder Flachfolien-Extrusion, insbesondere Blasfolien-Co-Extrusion und/oder Flachfolien-Co-Extrusion gebildet werden.

Werden einzelne Schichten einer erfindungsgemäßen Folie nach einem der vorstehenden Verfahren separat hergestellt, so kann der Haftvermittler z.B. als Pulver, in Form einer Folie, Schmelze oder als Flüssigzubereitung, zum Beispiel als Lösung oder Dispersion, nach üblichen Methoden wie Sprühen oder Gießen auf eine der Schichten der erfindungsgemäßen Folie, wie z.B. der Barriereschicht oder eine der Oberflächenschichten aufgebracht und eine weitere Schicht oder weitere Schichten damit verbunden werden. Alternativ kann der Haftvermittler auch auf eine der Schichten, wie z.B. der Barriereschicht oder eine der Oberflächenschichten durch Extrusion laminiert werden und eine weitere Schicht oder weitere Schichten damit verbunden werden.

Diese Herstellungsverfahren und entsprechende Produktionsparameter sind dem Fachmann allgemein bekannt.

Die erfindungsgemäße Mehrschichtfolie kann vorzugsweise durch Co-Extrusion hergestellt werden, wobei ein Blasfolien-Co-Extrusionsverfahren ganz besonders bevorzugt ist.

Die erfindungsgemäße Folie kann vorzugsweise geprägt und/oder gereckt werden.

Weiterhin kann die erfindungsgemäße Folie vorzugsweise bedruckt werden.

Die erfindungsgemäße Folie, insbesondere die erfindungsgemäße Mehrschichtfolie eignet sich zur Herstellung von Schutzfolien gegen die Einwirkung von UV-Strahlung und kurzwelligem sichtbaren Licht.

Ein weiterer Gegenstand der vorliegenden Erfindung ist daher die Verwendung der erfindungsgemäßen Folie, insbesondere der erfindungsgemäßen Mehrschichtfolie zur Herstellung von Schutzfolien gegen die Einwirkung von UV-Strahlung und kurzwelligem sichtbaren Licht.

Ein weiterer Gegenstand der vorliegenden Erfindung ist die Verwendung einer erfindungsgemäßen Folie als schlauchförmige Schutzfolie, insbesondere als äußere, schlauchförmige Schutzfolie eines zwei, schlauchförmige Folien aufweisenden, d. h. doppelwandigen, Schlauches zur Vermeidung von einer durch UV-Strahlung und/oder kurzwelligem Licht ausgelöste Aushärtung eines zwischen den beiden Schauchfolien verpackten, mit reaktivem Kunststoffharz getränkten Trägermaterials.

Besonders bevorzugt ist die Verwendung einer erfindungsgemäßen Folie als außenliegende, schlauchförmige Schutzfolie eines doppelwandigen Folienschlauches mit einem zwischen den beiden Folienschläuchen liegenden mit reaktivem Kunststoffharz getränkten Trägermaterial zur Kanalrohrsanierung gemäß Schlauchlining-Technik.

Die Verwendung einer erfindungsgemäßen Folie als außenliegende schlauchförmige Schutzfolie des beim Schlauchlining zum Einsatz kommenden, doppelwandigen Schlauches hat den großen Vorteil, dass sie neben der Einwirkung von UV-Strahlung auch die Einwirkung von kurzwelligem, sichtbaren Licht unterbindet. Dadurch können die in den auszuhärtenden Kunststoffharzen enthaltenen Photoinitiatoren auch bei Einwirkung längerwelliger Strahlung nicht aktiviert werden, wodurch eine ungewollte vorzeitige Aushärtung verhindert wird und der Schlauch langfristig, vorzugsweise wenigstens ein Jahr lagerfähig ist. Da die erfindungsgemäße Folie zudem kontakttransparent ist, kann die Kontrolle einer gleichmäßigen Tränkung des Trägermaterials mit dem auszuhärtenden Kunststoffharz einfach erfolgen, wodurch das Auftreten von Fehlstellen im sanierten Kanalrohr verhindert wird.

Sofern die erfindungsgemäße Schutzfolie auch eine Barriereschicht aufweist, wird mit ihrem Einsatz als Schutzfolie beim Kanalsanieren durch Schlauchlining-Technik zudem eine Barrierewirkung gegen eine mögliche Austrocknung des Harzes sowie ein Eintritt von Substanzen wie Monomeren in das Kanalsystem und ins Grundwasser verhindert. Außerdem kann die siegelfähige Oberfläche der erfindungsgemäßen Schutzfolie mit dem Trägermaterial durch vorzugsweise Heißsiegelung zumindest teilweise, vorzugsweise voll umfänglich verbunden werden, was die Stabilität des Systems verstärkt.

Weiterhin kann die erfindungsgemäße Schutzfolie auch zur Bedachung, als Außenverkleidung, für Schutzanzüge, als außenliegende Abdeckungen von Gebäudeteilen, Schildern sowie Anzeigetafeln jeder Art, für Brillengläser oder Fensterscheiben, als Verpackungsmaterial verwendet werden.

Der bei der Kanalsanierung gemäß Schlauchlining-Technik zum Einsatz kommende Schlauch sollte vorteilhafterweise nicht nur eine erfindungsgemäße Schutzfolie als außenliegende Schutzfolie aufweisen, um das zur Kanalsanierung zum Einsatz kommende Trägermaterial, das mit einer auszuhärtenden Kunststoffharzmasse getränkt ist, zu schützen, sondern auch als innenliegende Schlauchfolie eine vorzugsweise transparente Kunststofffolie, die die bei der Kanalsanierung notwendigen Eigenschaften aufweist.

Dazu muss die Folie nicht nur ausreichend lagerstabile mechanische Eigenschaften aufweisen, damit sie den Belastungen bei der Handhabung des Kanalsanierungsschlauches, insbesondere beim Aufblasen im Kanalsystem, bei dem vorangegangenen Transport und der vorangegangenen Lagerung standhält, sondern auch nach der Aushärtung des Kunststoffmaterials im Trägermaterial zum Sanierungsrohr ohne ein Ab- oder Zerreißen davon abziehbar ist.

Darüber hinaus muss gewährleistet sein, dass bis zum Einsatz des zur Kanalsanierung verwendeten Schlauches auch die innenliegende Schlauchfolie eine genügende Barriere gegen das Austrocknen des Harzes, d. h. gegen den Verlust von Monomeren bzw. übrigem Tränkmaterial bietet und bei der Aushärtung im Kanalrohr genügend UV-Strahlung durchlässt.

Eine weitere Aufgabe der vorliegenden Erfindung war es daher, ein Kanalrohrsanierungssystem zur Verfügung zu stellen, dass nicht nur vor dessen Einsatz die Einwirkung von UV-Strahlen und kurzwelligen, sichtbaren Licht verhindert, sondern auch die bei dessen Handhabung während und nach der Kanalrohrsanierung auftretende Probleme vermeidet.

Durch die Bereitstellung des erfindungsgemäßen Kanalrohrsanierungssystems gelingt dies.

Dieses erfindungsgemäße Kanalsanierungssystem zeichnet sich nicht nur durch einen Schlauch aus, dessen außenliegende Schlauchfolie der vorstehend beschriebenen erfindungsgemäßen Schutzfolie entspricht, die zumindest kontakttransparent und UV-Strahlung und kurzwelliges, sichtbares Licht absorbierende und/oder reflektierende Eigenschaften aufweist, sondern auch eine innenliegende Schlauchfolie, die zumindest für UV-Strahlen durchlässig, vorzugsweise transparent ist, umfasst, die das notwenige Eigenschaftsprofil aufweist. Vorzugsweise ist die innenliegende Schlauchfolie nicht schrumpffähig.

Vorzugsweise weist der Schlauch eine außenliegende Schlauchfolie als Schutzfolie und eine innenliegende Schlauchfolie sowie das dazwischenliegende Trägermaterial auf, das mit dem auszuhärtenden Kunststoffharz getränkt ist. Aus diesem getränkten Trägermaterial wird nach der Aushärtung das sanierte Kanalrohr gebildet. Als Trägermaterial kommt vorzugsweise Glasgewebe aus Glasfasern, Vliese und/oder nonwoven Textilfabrikate in Frage, das vorzugsweise mit ungesättigten Polyestherharzen und α,ß-ungesättigten Monomeren, wie z. B. Styrol getränkt ist.

Nach der Aushärtung wird die innenliegende, aufgeblasene Schlauchfolie vom sanierten, aus Kunststoff und Trägermaterial gebildeten Kanalrohr abgezogen.

Um den Anforderungen einer problemlosen Handhabung der Innenschlauchfolie bei der Kanalrohrsanierung gemäß Schlauchlining-Technik gerecht zu werden, wird erfindungsgemäß vorzugsweise wenigstens eine 3-schichtige Kunststofffolie eingesetzt, die eine Barriereschicht, vorzugsweise eine Sauerstoffbarriereschicht, Wasserdampfbarriereschicht und/oder Ölbarriereschicht umfasst, und deren an das getränkte Trägermaterial unmittelbar angrenzende Oberflächenschicht sich mit auszuhärtenden, flüssigen Tränkmaterial, d. h. mit der auszuhärtenden Kunststoffharzmasse, nicht dauerhaft z. B. durch Quellung und Aushärtung verbindet, sondern ohne Abreißen abziehbar bleibt.

Vorzugsweise basiert die Barriereschicht auf wenigstens einem der Polymeren, die auch für die Herstellung der Barriereschicht der außenliegenden, schlauchförmigen Schutzfolie des erfindungsgemäßen Kanalsanierungssystems vorstehend angegeben ist, besonders bevorzugt auf wenigstens einem Polyamid, Ethylen/vinylalkohol-Copolymer, Polyvinylalkohol, einem zyklischen Olefincopolymer, Polyvinylidenchlorid, ganz besonders bevorzugt auf wenigstens einem Polyamid.

Die Barriereschicht der innenliegenden schlauchförmigen Mehrschichtfolie des Schlauches trägt vorzugsweise auf jede ihrer Oberflächen eine weitere Kunststoffschicht, von denen die an das auszuhärtende Trägermaterial unmittelbar angrenzende Oberflächenschicht durch die Tränkflüssigkeit weder in ihren mechanischen Eigenschaften noch in ihrer Abziehbarkeit beeinflusst werden darf.

Bevorzugt eignen sich zur Herstellung dieser Oberflächenschichten Olefin-Homo oder Copolymeren. Besonders geeignete Olefin-Homo oder Copolymere sind thermoplastische Polymere von α,ß ungesättigten Olefinen mit 2 bis 8 KohlenstoffAtomen, wie beispielsweise Polyethylen, Polypropylen, Polybutylen, Polyisobutylen oder Mischungen von wenigstens zwei der genannten Polymeren. Ganz besonders bevorzugt wird ein Polypropylen, vorzugsweise mit statistischem Aufbau, oder eine Mischung aus Polyethylen und Polypropylen, zur Herstellung einer oder beider Oberflächenschichten verwendet. Eine Mischung aus Polyethylenen, vorzugsweise aus Polyethylen mit niedriger Dichte und aus einem linearen Polyethylen niedriger Dichte, kann auch vorzugsweise zur Herstellung einer oder beider Oberflächenschichten eingesetzt werden. Vorzugsweise ist die Barriereschicht mit den genannten Oberflächenschichten über eine Haftvermittlerschicht verbunden.

Die vorstehend angegebenen Polymermaterialien für Haftvermittlerschichten können auch zur Herstellung der Haftvermittlerschichten zwischen der Barriereschicht und der jeweiligen Oberflächenschicht eingesetzt werden.

Ganz besonders bevorzugt wird als innenliegende Schlauchfolie für das erfindungsgemäße Kanalsanierungssystem eine 5-schichtige Folie mit folgendem Aufbau eingesetzt:
Schicht a) basierend auf einer Mischung aus Polypropylen vorzugsweise mit statistischem Aufbau, und Polyethylen die direkt an das auzuhärtende Trägermaterial angrenzt
Schicht b) basierend aus gepropften Polypropylen als Haftvermittlerschicht
Schicht c) basierend auf einem thermoplastischen Polyamid als Barriereschicht
Schicht d) basierend aus gepropften Polypropylen als Haftvermittlerschicht
Schicht e) basierend auf Polyethylen, vorzugsweise auf einer Mischung von LDPE und LLDPE,

Jede der Schichten des innenliegenden Folienschlauches kann auch, wenn notwendig, jeweils unabhängig voneinander mit Additiven ausgewählt aus der Gruppe umfassend Antioxidantien, Antiblockmittel, Antifogmittel, Antistatika, antimikrobielle Wirkstoffe, Hitze-Stabilisatoren, Prozess-Stabilisatoren, Prozesshilfsmittel, Flammschutzmittel, Nukleierungsmittel, Kristallisationsmittel, vorzugsweise Kristallkeimbildner, Gleitmittel, Flexibilisierungsmittel, Siegelmittel, Weichmacher, Silane, Abstandshalter, Füllstoffe, Peel-Additive, Wachse, Benetzungsmittel, oberflächenaktive Verbindungen, vorzugsweise Tenside, und Dispergiermittel ausgerüstet sein.

In dem erfindungsgemäßen Kanalsanierungssystem wird vorzugsweise die innenliegende, schlauchförmige Mehrschichtfolie so verwendet, dass an die Oberflächenschicht basierend auf der Mischung von Polypropylen und Polyethylen das auszuhärtende Trägermaterial direkt angrenzt.

Die innenliegende Schlauchfolie der erfindungsgemäßen Kanalsanierungssystems hat vorzugsweise eine Gesamtdicke von 20 - 2.000 µm, vorzugsweise von 120 - 300 µm, ganz besonders bevorzugt 150 - 250 µm und zeichnet sich durch hervorragende mechanische Werte aus.

Durch den Einsatz des erfindungsgemäßen Schlauchsanierungssystems, insbesondere durch die vorstehend beschriebenen Innenschlauchfolie, kann der in den zu sanierenden Kanal eingezogene, doppelwandige Schlauch problemlos, d. h. ohne Aufplatzen aufgeblasen werden, um eine problemlose UV-Aushärtung des im Schlauch befindlichen, mit dem flüssigen Tränkmaterial getränkten Trägermaterials zu erzielen. Außerdem kann nach der Aushärtung, wenn das gefestigte, sanierte Kanalrohr aus dem ausgehärteten Trägermaterial vorliegt, die Innenschlauchfolie ohne Abreißen bzw. Festsitzen davon abgezogen werden.

### Beispiele:

Die nachfolgenden Beispiele dienen der Erläuterung der Erfindung, sind jedoch nicht einschränkend auszulegen.

### Chemische Charakterisierung der eingesetzten Rohstoffe:

| | |
|---|---|
| Batch 1: | Masterbatch (Zinkoxid und sterisch gehindertes Amin (Polypiperidinaminoderivat) (60 Gew.%), LDPE (40 Gew.%)) |
| Batch 2: | Masterbatch (gelbes Pigment: Benzimidazolon (40 Gew.%), PE (60 Gew.%)) |
| Admer NF 498E: | mit Maleinsäureanhydridgruppen modifiziertes LDPE der Firma Mitsui (Haftvermittler) |
| Durethan C 38F: | Copolyamid |
| Admer Q B 520 E: | Polypropylen mit Maleinsäureanhydrid geproft |
| Dow R 338-02N: | Statisch aufgebautes Polypropylen der Firma Dow |

Die Mehrschichtfolien der Vergleichsbeispiele 1 bis 3 sowie des Beispiels 1 bestehen jeweils aus 5 Schichten, weisen eine Schichtdicke von jeweils 200 µm auf und wurden durch Blasfolien-Co-Extrusion hergestellt. Die Schichten 1-5 grenzen in nachstehender Reihenfolge jeweils unmittelbar aneinander. Alle nachfolgenden %-Angaben stellen jeweils Gew.% dar.

### Vergleichsbeispiel 1 (farblose, transparente Folie):

Schicht 1 (65 µm): 100% LDPE
Schicht 2 (20 µm): 100% Admer NF 498E
Schicht 3 (30 µm): 100% PA
Schicht 4 (20 µm): 100% Admer NF 498E
Schicht 5 (65 µm): 100% LDPE

### Vergleichsbeispiel 2 (farblose Folie enthaltend wenigstens eine UV-Strahlung absorbierende und/oder reflektierende Verbindung):

Schicht 1 (65 µm): 100% LDPE
Schicht 2 (20 µm): 97% Admer NF 498E und 3% Batch 1
Schicht 3 (30 µm): 100% PA
Schicht 4 (20 µm): 97% Admer NF 498E und 3% Batch 1
Schicht 5 (65 µm): 100% LDPE

### Vergleichsbeispiel 3 (gelbe Folie enthaltend wenigstens ein kurzwelliges, sichtbares Licht absorbierendes und/oder reflektierendes Farbpigment oder Farbstoff):

Schicht 1 (65 µm): 97% LDPE und 3% Batch 2
Schicht 2 (20 µm): 100% Admer NF 498E
Schicht 3 (30 µm): 100% PA
Schicht 4 (20 µm): 100% Admer NF 498E
Schicht 5 (65 µm): 97% LDPE und 3% Batch 2

### Vergleichsbeispiel 4:

Die Mehrschichtfolie des Vergleichsbeispiels 4 besteht aus 5 Schichten, weist eine Schichtdicke von 230 µm auf, ist handelsüblich erhältlich und stellt eine undurchsichtige silberfarbene bis graue Folie dar. Die Schichten 1-5 grenzen in nachstehender Reihenfolge jeweils unmittelbar aneinander. Die nachfolgenden %-Angaben stellen jeweils Gew.% dar.
Schicht 1 (95 µm): LDPE und silberner Farbbatch
Schicht 2 (9 µm): 100% Admer NF 498E
Schicht 3 (26 µm): 100% PA
Schicht 4 (9 µm): 100% Admer NF 498E
Schicht 5 (93 µm): LDPE und silberner Farbbatch

**Beispiel 1** (gelbe Folie enthaltend wenigstens ein kurzwelliges, sichtbares Licht absorbierendes und/oder reflektierendes Farbpigment oder Farbstoff und wenigstens eine UV-Strahlung absorbierende und/oder reflektierende Verbindung):
Schicht 1 (65 µm): 97% LDPE und 3% Batch 2
Schicht 2 (20 µm): 97% Admer NF 498E und 3% Batch 1
Schicht 3 (30 µm): 100% PA
Schicht 4 (20 µm): 97% 100% Admer NF 498E und 3% Batch 1
Schicht 5 (65 µm): 97% LDPE und 3% Batch 2

**Beispiel 2** (gelbe Folie enthaltend wenigstens ein kurzwelliges, sichtbares Licht absorbierendes und/oder reflektierendes Farbpigment oder Farbstoff und wenigstens eine UV-Strahlung absorbierende und/oder reflektierende Verbindung):

Die Mehrschichtfolie des Beispiels 2 besteht aus 9 Schichten, weist eine Schichtdicke von 170 µm auf und wurde durch Blasfolien-Co-Extrusion und durch Schlauchverklebung hergestellt. Die Schichten 1-9 grenzen in nachstehender Reihenfolge jeweils unmittelbar aneinander. Die nachfolgenden %-Angaben stellen jeweils Gew.% dar.
Schicht 1 (29 µm): 97,5% LDPE und 2,5% Batch 2
Schicht 2 (6 µm): 100% Admer NF 498E
Schicht 3 (30 µm): 100% PA
Schicht 4 (6 µm): 100% Admer NF 498E
Schicht 5 (58 µm): 87,5 % Ethylen-Vinylacetat-Copolymer, 2,5 % Batch 2, 10% Batch 1
Schicht 6 (6 µm): 100% Admer NF 498E
Schicht 7 (30 µm): 100% PA
Schicht 8 (6 µm): 100% Admer NF 498E
Schicht 9 (29 µm): 97,5% LDPE und 2,5% Batch 2

**Beispiel 3** Eine farblose, transparente Mehrschichtfolie gemäß der nachstehenden Angabe wurde mit einer Gesamtschichtdicke von 200 µm durch Blasfolien-Co-Extrusion hergestellt. Die angegebenen Schichten grenzen in der angegebenen Reihenfolge jeweils unmittelbar aneinander. Alle nachfolgenden Prozentangaben stellen jeweils Gew.% da.

### Beispiel 3 (farblose, transparente Folie):

Schicht 1 (65 µm): Mischung aus 50 Gew.% Polypropylen (Dow R 338-02N) und 50 Gew.% LDPE
Schicht 2 (15 µm): 100 % Admer QP 520 E
Schicht 3 (40 µm): Durethan C 38 F (Copolyamid)
Schicht 4 (15 µm): Admer NF 498 E (Haftvermittler)
Schicht 5 (65 µm): Mischung aus LDPE/ LLDPE 70:30

### Vergleichsbeispiel 5 (farblose/transparente Folie)

Diese Mehrschichtfolie mit der nachstehenden Schichtfolge und einer GesamtSchichtdicke von 200 µm wurde durch Blasfolien-Coextrusion hergestellt.
Schicht 1 (145 µm): LDPE
Schicht 2 (15 µm): Admer QB 520 E (Haftvermittler)
Schicht 3 (40 µm): Durethan C 38 F (Copolyamid)

### Bestimmungsmethoden:

### Bestimmung der Kontakttransparenz:

Zur Bestimmung der Kontakttransparenz wird die jeweilige Folie auf eine mit schwarzem Text (Schriftart: Arial, Schriftgröße 10) bedruckte weiße DINA4-Seite gelegt und es wird die Lesbarkeit des darunter liegendes Textes mit einem Schulnotensystem beurteilt:
Note 1: sehr gut lesbar (Text klar erkennbar, es fällt nicht auf, dass eine Folie über dem Text liegt),
Note 2: sehr leichte Beeinträchtigung der Lesbarkeit des Textes unter der Folie, Note 3: leichte Beeinträchtigung der Lesbarkeit des Textes unter der Folie,
Note 4: Merkliche Beeinträchtigung der Lesbarkeit des Textes unter der Folie. Der Text kann aber insgesamt noch gelesen werden.
Note 5: Deutliche Beeinträchtigung der Lesbarkeit des Textes unter der Folie. Die Buchstaben erscheinen sehr verschwommen und sind verdeckt und sind fast nicht mehr zu erkennen. Der Text kann praktisch nicht mehr gelesen werden.
Note 6: Der Text unter der Folie kann nicht mehr erkannt werden und ist unlesbar. Die Folie deckt den Text (nahezu) vollständig ab. Es liegt keine Kontakttransparenz mehr vor.

Die Kontakttransparenz ist von den Schichtdicken der jeweiligen Folien abhängig. Bei den Beispielen 1 und 2 und den Vergleichsbeispielen 1-3 ist die Schichtdicke der Folie kleiner oder gleich 200 µm. Bei Vergleichsbeispiel 4 beträgt die Schichtdicke der Folie 230 µm. Ein analoges Resultat wäre bei Vergleichsbeispiel 4 aber auch bei einer Schichtdicke dieser Folie kleiner als 200 µm erzielt worden, da diese undurchsichtig ist.

### Bestimmung der UV/Licht-Blockerwirkung:

### Verwendetes UV-VIS-Gerät: UV-31 01 PC von Shimadzu.

Für die Bestimmung der Schutzwirkung der Folie gegen UV-Strahlung bzw. kurzwelliges, sichtbares Licht wird aus der Folie ein kleiner Beutel (Abmessung 10 cm x 10 cm) durch entsprechendes Siegeln geformt. In diesen Beutel legt man - in einem abgedunkelten Raum - innerhalb von 1 Minute ca. 50 g einer reaktiven Harzmischung, die durch UV- oder kurzwelliges, sichtbares Licht aushärten kann. Anschließend wird der Beutel vollständig und dicht verschlossen, und dem Sonnenlicht ausgesetzt (die Versuche fanden an Sonnentagen mit mehr als 8 Stunden Sonnenstrahlung pro Tag im Juli statt).

Es wird die Zeit ermittelt, bis sich das verpackte Harz durch strahleninduzierte Aushärtung durch Sonnenlicht verfestigt hat. Bei maximaler Schutzwirkung gegen UV-Strahlung bzw. kurzwelliges, sichtbares Licht kann das Harz unendlich lange dem Sonnenlicht ausgesetzt werden, ohne auszuhärten.

### Messergebnisse:

| **Beispiel** | **Transmission [%] bei den Wellenlängen 300/350/380/400/430 und 450 nm** | **Kontakttransparenz [Note]** | **Zeit der Aushärtung des Harzes in der Folie durch Sonnenlicht** |
|---|---|---|---|
| Vergleichsbeispiel 1 | 90.3/91.2/92.2/92.7/93.7/ 95.6 | 1 | kleiner 1 min |
| Vergleichsbeispiel 2 | 1.02/0.12/0.58/33.6/84.9/ 91.03 | 1 | 30 min |
| Vergleichsbeispiel 3 | 12.31/20.63/3.25/2.25/1.32/ 0.92 | 2 | 14 min |
| Vergleichsbeispiel 4 | 0.92/1.21/1.42/1.63/1.43/ 1.30 | 6 | 25 Tage |
| Beispiel 1 | 0.22/0.33/0.043/0.037/ 0.032/0.066 | 2 | keine Härtung nach 3 Monaten |
| Beispiel 2 | 0.026/0.018/0.021/0.043/ 0.071/0.082 | 3 | keine Härtung nach 3 Monaten |

Vergleichsbeispiel 1 zeigt, dass eine herkömmliche, farblose, hoch transparente Folie keinerlei Blockerwirkung gegen UV- bzw. kurzwelliges sichtbares Licht (Vis) aufweist, so dass bei Einwirkung von UV-Vis-Strahlung eine sofortige Aushärtung des Harzes stattfindet. Es liegt im Wellenlängenbereich von 300 bis 450 nm eine Transmission größer als 90% vor. Zwar ist die Kontakttransparenz der Folie dabei hervorragend, jedoch erfüllt die Folie keinerlei Schutzfunktion gegenüber strahleninduzierter Harzaushärtung, wobei die Aushärtung des Harzes im Bereich 300 bis 450 nm erfolgt.

Vergleichsbeispiel 2 zeigt, dass durch Zugabe wenigstens einer UV-Strahlung absorbierenden und/oder reflektierende Verbindung gegenüber Vergleichsbeispiel 1 eine gewisse Schutzfunktion gegenüber Aushärtung des Harzes durch UV-Strahlung (bis 380 nm) erreicht werden kann, da sich die Transmission bei der Folie bis 380 nm auf unter 1,1 % beläuft. Die Aushärtung des Harzes findet aber durch kurzwelliges, sichtbares Licht mit Wellenlängen größer 380 nm dennoch statt, was durch die zunehmende Transmission bei höher werdenden Wellenlängen begründet ist.

Somit ist die Schutzfunktion der Folie gegenüber strahleninduzierter Harzaushärtung immer noch ungenügend. Die Kontakttransparenz der Folie ist dabei immer noch hervorragend.

Vergleichsbeispiel 3 beweist, dass durch Zugabe wenigstens eines gelben, kurzwelliges, sichtbares Licht absorbierendes und/oder reflektierendes Farbpigments gegenüber Vergleichsbeispiel 1 eine gewisse Schutzfunktion gegenüber Aushärtung des Harzes durch sichtbares Licht (ab ca. 400 nm) erreicht werden kann, da sich die Transmission ab 400 nm bis 450 nm auf unter 3 % beläuft. Die Aushärtung des Harzes findet aber durch UV-Licht mit Wellenlängen kleiner 380 nm dennoch statt, da hier die Transmission viel zu hoch ist. Somit ist die Schutzfunktion der Folie gegenüber strahleninduzierter Harzaushärtung immer noch ungenügend. Die Kontakttransparenz der Folie ist durch Zugabe eines Farbbatches gegenüber Vergleichsbeispiel 1 etwas reduziert worden; die Kontakttransparenz ist aber immer noch hervorragend.

Vergleichsbeispiel 4 zeigt eine Folie, die keine Kontakttransparenz mehr aufweist. Die Transparenz dieser Folie liegt unter 1 %, der Haze-Grad bei über 99 %. In diesem Fall wurde ein silbriges bis graues Pigment in hoher Konzentration in die Folie gegeben, um eine Schutzwirkung gegen UV-Vis-Strahlung zu erreichen, damit das Harz in dem kritischen Wellenlängenbereich 300 bis 450 nm nicht aushärtet. Die Folie weist eine deutlich erhöhte Schutzfunktion gegen UV-Vis-Strahlung gegenüber den vorhergehenden Vergleichsbeispielen auf. Dennoch konnte nach 25 Tagen eine Harzaushärtung festgestellt werden, nachdem das verpackte Harz dem Sonnenlicht ausgesetzt war. Wegen der mangelnden oder nicht vorhandenen Kontakttransparenz kann aber die Folie aus Vergleichsbeispiel 4 nur sehr eingeschränkt verwendet werden.

Wird mit der Folie z.B. Glasfasergewebe getränkt mit Harz eingewickelt, so kann man nicht mehr überprüfen, ob die Tränkung des Glasfasermaterials mit Harz vollständig und homogen erfolgt ist.

Die Beispiele 1 und 2 belegen die Eignung der erfindungsgemäßen Folien als Schutzfolie zur Vermeidung der Aushärtung strahlungshärtender Harze im Bereich 300 bis 450 nm.

Nur durch die Kombination wenigstens einer UV-Strahlung absorbierenden und/oder reflektierende Verbindung und wenigstens eines kurzwelliges, sichtbares Licht absorbierendes und/oder reflektierendes Farbpigment kann die Transmission derart reduziert werden, so dass bei Lagerung in der Sonne nach 3 Monaten praktisch keine Harzaushärtung stattfindet. Die Werte für die Transmission sind im Bereich 300 bis 450 nm stets kleiner 0,5 %. Besonders hervorzuheben ist dabei die immer noch hervorragende Kontakttransparenz der erfindungsgemäßen Folien.

### Eignungstest als innenliegende Schlauchfolie

Zur Feststellung wie weit eine transparente Mehrschichtfolie gemäß Beispiel 3 bzw. Vergleichsbeispiel 5 als innenliegende Schlauchfolie für das erfindungsgemäße Schlauchsanierungssystem in Frage kommt, wurden auf einer Unterlage auszuhärtendes Trägermaterial aufgebracht und jeweils mit einer Mehrschichtfolie gemäß Beispiel 3 bzw. einer Mehrschichtfolie gemäß Vergleichsbespiel 5 abgedeckt. Dazu wurde die Mehrschichtfolie gemäß Beispiel 3 bzw. Vergleichsbeispiel 5 mit der Schicht aus PP/PE Mischung bzw. aus Polyamid mit dem auszuhärtenden Trägermaterial in Berührung gebracht und anschließend mit UV-Licht ausgehärtet.

Die Schlauchfolie gemäß Beispiel 3 konnte ohne Mühe nach der Aushärtung des Harz/Trägermaterials wieder abgezogen werden und zeigte keine mechanische Beeinträchtigung. Dagegen war die Mehrschichtfolie an einigen Stellen fest mit dem Trägermaterial verbunden, so dass an solchen Stellen ein Abriss der Folie erfolgte.

Durch diese Gefahr einer zu intensiven Verbindung der Polyamidschicht der Mehrschichtfolie gemäß Vergleichsbeispiel 5 mit dem ausgehärteten Harz ist auch eine Versprödung und damit mechanische Beeinträchtigung der innenliegenden Schlauchfolie und die Entfernung der Schlauchfolie nach der Aushärtung mit Schwierigkeiten verbunden. Beide Beeinträchtigungen sind mit der innenliegenden, schlauchförmigen Mehrschichtfolie bei einem erfindungsgemäßen Kanalsanierungssystem nicht gegeben.

## Patentansprüche

1. Ein Kanalrohrsanierungssystem geeignet für eine Schlauchlining-Technik umfassend einen, für das Einbringen in das zu sanierende Kanalrohr vorgesehenen doppelwandigen Schlauch aus einer außenliegenden, schlauchförmigen Schutzfolie und einer innenliegenden, mehrschichtigen Kunststoffschlauchfolie und einem zwischen den beiden Schlauchfolien befindlichen, durch UV-Strahlung aushärtbaren, imprägniertem Trägermaterial, vorzugsweise einem mit einem ungesättigen Harzsystem getränkten Glasfasermaterial, **dadurch gekennzeichnet, dass**
die außenliegende, schlauchförmige Schutzfolie eine zumindest kontakttransparente, UV-Strahlung und kurzwelliges, sichtbares Licht absorbierende und/oder reflektierende, einschichtige oder mehrschichtige Folie umfassend wenigstens eine Schicht basierend auf wenigstens einem gegebenenfalls modifizierten thermoplastischen Olefin-Homo-oder Copolymeren enthaltend eine Kombination aus wenigstens einem kurzwelliges, sichtbares Licht absorbierenden und/oder reflektierendes organischen oder anorganischen Farbpigment oder Farbstoff, und aus wenigstens einer die UV-Strahlung absorbierenden und/oder reflektierenden, organischen oder anorganischen Verbindung, ist.

2. Das Kanalrohrsanierungssystem nach Anspruch 1, **dadurch gekennzeichnet, dass** die innenliegende, mehrschichtige Schlauchfolie eine Schicht a) aus wenigstens einem Polyolefin, wenigstens einem Olefin-Copolymeren oder aus einer Mischung von Polyolefinen, die mit dem Trägermaterial direkt in Berührung kommt, eine Haftvermittlerschicht b), eine Barriereschicht c) basierend auf Polyamid, eine weitere Haftvermittlerschicht d) und eine Schicht e) basierend auf wenigstens einem Olefin-Homo oder Copolymeren umfasst.

3. Das Kanalrohrsanierungssystem nach Anspruch 1 oder 2, **dadurch gekennzeichnet, dass** das organische oder anorganische Farbpigment oder der Farbstoff der außenliegenden Schutzfolie kurzwelliges, sichtbares Licht, vorzugsweise zu mehr als 90 %, absorbiert und/oder reflektiert.

4. Das Kanalrohrsanierungssystem nach einem der vorstehenden Ansprüche, **dadurch gekennzeichnet, dass** das organische oder anorganische Farbpigment oder der Farbstoff Licht im Wellenbereich von 400 bis 500 nm absorbiert und/oder reflektiert und die UV-Strahlung absorbierende und/oder reflektierende Verbindung der außenliegenden Schutzfolie wenigstens eine Verbindung ist, die die UV-Strahlung in einem Wellenlängenbereich von 200 bis 400 nm, vorzugsweise zu mehr als 90 % absorbiert und/oder reflektiert.

5. Das Kanalrohrsanierungssystem nach einem der vorstehenden Ansprüche, **dadurch gekennzeichnet, dass** als organisches oder anorganisches Farbpigment wenigstens ein Farbpigment ausgewählt aus der Gruppe umfassend Carbonyl-Farbstoffe, vorzugsweise Chinone, Indigo-Farbstoffe und Chinacridone, Azo-Verbindungen, Cyanin-Verbindungen, vorzugsweise Triphenylmethan-Verbindungen, Azomethine, Isoindoline, Dioxazine, Metalloxide, Übergangsmetalloxide, Metalloxidhydrate und Übergangsmetalloxidhydrate, vorzugsweise ein gelbes Farbpigment oder ein gelber Farbstoff ausgewählt aus dieser Gruppe, vorliegt.

6. Das Kanalrohrsanierungssystem nach einem der vorstehenden Ansprüche, **dadurch gekennzeichnet, dass** als UV-Strahlung absorbierende und/oder reflektierende Verbindung wenigstens eine Verbindung ausgewählt aus der Gruppe umfassend Metalloxide, Übergangsmetalloxide, Metalloxidhydrate, Übergangsmetalloxidhydrate, Benzophenone, Anthranilate, Salicylate, Dibenzoylmethane-Derivate, p-Aminobenzosäure-Derivate, Zimtsäure-Derivate (Phenylacrylsäure -Derivate), Cyanoacrylate, Benzimidazol-Derivate, Benzotriazol-Derivate, β-β'-Divinylacrylate, Alkyl-α-cyano-β-β'-divinylacrylate, 1,3,5-Triazin-Verbindungen und sterisch gehinderte Amine vorliegt.

7. Das Kanalrohrsanierungssystem nach einem der vorstehenden Ansprüche, **dadurch gekennzeichnet, dass** als eine die UV-Strahlung absorbierende Verbindung wenigstens eine Verbindung ausgewählt aus der Gruppe umfassend Zinkoxid, Titandioxid, 2-Ethoxy-ethyl-p-methoxycinnamat, Diethanolamin-p-methoxycinnamat, Octyl-p-methoxycinnamat, 2-Ethylhexyl-2-cyano-3,3-diphenylacrylat, Kaliumcinnamat, Propyl-4-methoxy-cinnamat, Amyl-4-methoxycinnamat, α-Cyano-4-methoxyzimtsäure bzw. der entsprechende Hexylester, Cyclohexyl-4-methoxycinnamat, Glyceryl-p-amino-benzoat, Amyl-p-dimethylaminobenzoat, Ethyl-4-bis(hydroxypropyl)-aminobenzoat, Octyl-p-dimethylaminobenzoat, Ethoxylierte-4-Aminobenzosäure, Octylsalicylat, Triethanolaminsalicylat, Salze der Salicylsäure, 4-Isopropylbenzylsalicylat, 2-Ethylhexyl-2-(4-phenylbenzoyl)benzoat, Homomenthylsalicylat, , 2-Hydroxy-4-methoxybenzophenon, 2,4,6-Trianilino-(p-carbo-2-ethylhexyloxy)-1,3,5-triazin, 2-Phenylbenzimidazol-5-sulfonsäure, 1-(4-tert-Butylphenyl)-3-(4-methoxyphenyl)propan-1,3-dion, p-Cumenyl-3-phenylpropan-1,3-dion, 1,3-Bis(4-Methoxyphenyl)propan-1,3-dion, Menthylanthranilat, Homomenthyl-N-acetylanthranilat, 2-Hydroxy-4-octylbenzophenon, 6-*tert*-Butyl-2-(5-chlor-2H-benzotriazol-2-yl)-4-methylphenol, 2,4-Di-*tert*-butyl-6-(5-chlor-2H-benzotriazol-2-yl)-phenol, 2-(2H-Benzotriazol-2-yl)-4,6-di-*tert*-pentylphenol, 2-(2H-Benzotriazol-2-yl)-4-(1,1,3,3-tetramethylbutyl)-phenol, 1,3-Bis-[(2'-cyano-3',3'-diphenylacryloyl)oxy]-2,2-bis-{[(2'-cyano-3',3'-diphenylacryloyl)oxy]methyl}-propan, 2-(2H-Benzotriazol-2-yl)-4-methylphenol, 2-(2H-Benzotriazol-2-yl)-4,6-bis(1-methyl-1-phenylethyl)phenol, Ethyl-2-cyano-3,3-diphenylacrylat, (2-Ethylhexyl)-2-cyano-3,3-diphenylacrylat, N,N'-Bisformyl-N,N'-bis-(2,2,6,6-tetramethyl-4-piperidinyl)-hexamethylendiamin, Bis-(2,2,6,6-tetramethyl-4-piperidyl)-sebacat, Bis-(1,2,2,6,6-pentamethyl-4-piperidyl)-sebacat, Methyl-(1,2,2,6,6-pentamethyl-4-piperidyl)-sebacat, 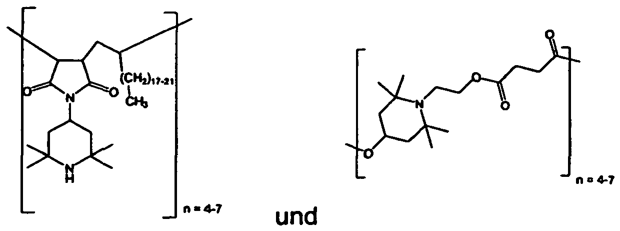 eingesetzt wird.

8. Das Kanalrohrsanierungssystem nach einem der vorstehenden Ansprüche, **dadurch gekennzeichnet, dass** 0,05 bis 20, vorzugsweise 0,1 bis 5 Gew.%, besonders bevorzugt 0,1 bis 2 Gew.%, der Kombination, bezogen auf das Gesamtgewicht der außenliegenden Schutzfolie, vorhanden sind.

9. Das Kanalrohrsanierungssystem nach einem der vorstehenden Ansprüche, **dadurch gekennzeichnet, dass** die außenliegende Schutzfolie mehrschichtig ist, wobei die Komponenten der Kombination in unterschiedlichen Schichten, vorzugsweise das kurzwelliges, sichtbares Licht absorbierende und/oder reflektierende Farbpigment oder der Farbstoff in wenigstens einer Oberflächenschicht der Folie und die organische oder anorganische UV-Strahlung absorbierende und/oder reflektierende Verbindung in wenigstens einer innenliegenden Schicht, oder in derselben Schicht vorliegen, die vorzugsweise wenigstens eine der innenliegenden Schichten ist.

10. Das Kanalrohrsanierungssystem nach einem der vorstehenden Ansprüche, **dadurch gekennzeichnet, dass** die Schutzfolie wenigstens eine Barriereschicht, vorzugsweise eine Sauerstoffbarriereschicht, Wasserdampfbarrierschicht oder Ölbarriereschicht, die vorzugsweise auf wenigstens einen Polymer ausgewählt aus der Gruppe umfassend Polyamid, EVOH, Polyvinylalkohol, COC, Polyvinylidenchlorid und einer Mischung aus wenigstens zwei der genannten Polymere basiert, umfasst.

11. Das Kanalrohrsanierungssystem nach einem der vorstehenden Ansprüche, **dadurch gekennzeichnet, dass** wenigstens eine Oberflächenschicht, vorzugsweise jede der Oberflächen, der Schutzfolie auf einem Olefin-Homo oder - Copolymeren basiert und die Schutzfolie wenigstens eine Barriereschicht umfasst, wobei zwischen der oder den Oberflächenschicht(en) und der Barriereschicht (jeweils) eine Haftvermittlerschicht, vorzugsweise aus einem modifizierten Polyolefin, angeordnet ist.

12. Das Kanalrohrsanierungssystem nach Anspruch 11, **dadurch gekennzeichnet, dass** die Kombination in der Haftvermittlerschicht vorliegt oder jede der Haftvermittlerschichten die Kombination, vorzugsweise wenigstens die UV-Strahlung absorbierende und/oder reflektierende Verbindung, enthält.

13. Das Kanalrohrsanierungssystem nach einem der vorstehenden Ansprüche, **dadurch gekennzeichnet, dass** das das kurzwellige Licht absorbierende und/oder reflektierende Farbpigment oder der entsprechende Farbstoff in jeder der Schichten mit Ausnahme der Barriereschicht einer mehrschichtigen Schutzfolie vorliegt.

14. Das Kanalrohrsanierungssystem nach einem der vorstehenden Ansprüche, **dadurch gekennzeichnet, dass** jede Komponente der Kombination bei Temperaturen bis zu 300 °C stabil ist.

15. Eine Verwendung
einer zumindest kontakttransparenten, UV-Strahlung und kurzwelliges, sichtbares Licht absorbierenden und/oder reflektierenden, einschichtigen oder mehrschichtigen Folie umfassend wenigstens eine Schicht basierend auf wenigstens einem gegebenenfalls modifizierten thermoplastischen Olefin-Homo-oder Copolymeren enthaltend eine Kombination aus wenigstens einem kurzwelliges, sichtbares Licht absorbierenden und/oder reflektierendes organischen oder anorganischen Farbpigment oder Farbstoff, und aus wenigstens einer die UV-Strahlung absorbierenden und/oder reflektierenden, organischen oder anorganischen Verbindung,
als Schutzfolie in Form einer außen liegenden Schlauchfolie eines doppelwandigen Schlauches zur Vermeidung von durch UV-Strahlung und/oder kurzwelligem Licht ausgelöster Härtung eines zwischen der äußeren und der innenliegenden Schlauchfolie verpackten, reaktiven Kunststoffharzes,
insbesondere als schlauchförmige Schutzfolie bei der Schlauchlining-Technik zur Kanalrohrsanierung.

## Claims

1. Sewer pipe restoration system suitable for a tube lining technique, comprising a double-walled tube, provided for introduction into the sewer pipe to be restored, consisting of an external protective film in tubular form, an internal multilayer plastic tubular film and an impregnated carrier material, which can be cured by UV radiation, present between the two tubular films, preferably a glass fiber material impregnated with an unsaturated resin system, **characterized in that** the external protective film in tubular form is an at least contact transparent, single layer or multilayer film absorbing and/or reflecting UV radiation and short-wavelength visible light, comprising at least one layer based on at least one optionally modified thermoplastic olefin homo- or copolymer, comprising a combination of at least one organic or inorganic colored pigment or dye absorbing and/or reflecting short-wavelength visible light, and of at least one organic or inorganic compound absorbing and/or reflecting the UV radiation.

2. Sewer pipe restoration system according to Claim 1, **characterized in that** the internal multilayer tubular film comprises a layer a) of at least one polyolefin, at least one olefin copolymer or of a mixture of polyolefins, which comes in direct contact with the carrier material, an adhesion promoter layer adhesion promoter layer d) and a layer e) based on at least one olefin homo- or copolymer.

3. Sewer pipe restoration system according to Claim 1 or 2, **characterized in that** the organic or inorganic colored pigment or the dye of the external protective film absorbs and/or reflects short-wavelength visible light, preferably to an extent of more than 90%.

4. Sewer pipe restoration system according to any of the preceding claims, **characterized in that** the organic or inorganic colored pigment or the dye absorbs and/or reflects light in the wavelength range of from 400 to 500 nm. UV radiation absorbing and/or reflecting compound and at least one compound which absorbs and/or reflects the UV radiation in a wavelength range of from 200 to 400 nm, preferably to an extent of more than 90% of the external protective film.

5. Sewer pipe restoration system according to any of the preceding claims, **characterized in that** at least one colored pigment selected from the group comprising carbonyl dyes, preferably quinones, indigo dyes and quinacridones, azo compounds, cyanine compounds, preferably triphenylmethane compounds, azomethines, isoindolines, dioxazines, metal oxides, transition metal oxides, metal oxide hydrates and transition metal oxide hydrates, preferably a yellow colored pigment or a yellow dye selected from this group, is present as the organic or inorganic colored pigment.

6. Sewer pipe restoration system according to any of the preceding claims, **characterized in that** at least one compound selected from the group comprising metal oxides, transition metal oxides, metal oxide hydrates, transition metal oxide hydrates, benzophenones, anthranilates, salicylates, dibenzoylmethane derivatives, p-aminobenzoic acid derivatives, cinnamic acid derivatives (phenylacrylic acid derivatives), cyanoacrylates, benzimidazole derivatives, benzotriazole derivatives, β-β'-divinylacrylates, alkyl-α-cyano-β-β'-divinylacrylates, 1,3,5-triazine compounds and sterically hindered amines is present as the UV radiation absorbing and/or reflecting compound.

7. Sewer pipe restoration system according to any of the preceding claims, **characterized in that** at least one compound selected from the group comprising zinc oxide, titanium dioxide, 2-ethoxy-ethyl p-methoxycinnamate, diethanolamine p-methoxycinnamate, octyl p-methoxycinnamate, 2-ethylhexyl 2-cyano-3,3-diphenylacrylate, potassium cinnamate, propyl 4-methoxycinnamate, amyl 4-methoxycinnamate, α-cyano-4-methoxycinnamic acid or the corresponding hexyl ester, cyclohexyl 4-methoxycinnamate, glyceryl p-aminobenzoate, amyl p-dimethylaminobenzoate, ethyl 4-bis(hydroxypropyl)aminobenzoate, octyl-p-dimethylaminobenzoate, ethoxylated 4-aminobenzoic acid, octyl salicylate, triethanolamine salicylate, salts of salicylic acid, 4-isopropylbenzyl salicylate, 2-ethylhexyl 2-(4-phenylbenzoyl)benzoate, homomenthyl salicylate, 2-hydroxy-4-methoxybenzophenone, 2,4,6-trianilino-(p-carbo-2-ethylhexyloxy)-1,3,5-triazine, 2-phenylbenzimidazole-5-sulfonic acid, 1-(4-tert-butylphenyl)-3-(4-methoxyphenyl)propane-1,3-dione, p-cumenyl-3-phenylpropane-1,3-dione, 1,3-bis(4-methoxyphenyl)propane-1,3-dione, menthylanthranilate, homomenthyl N-acetylanthranilate, 2-hydroxy-4-octylbenzophenone, 6-*tert*-butyl-2-(5-chloro-2H-benzotriazol-2-yl)-4-methylphenol, 2,4-di-*tert*-butyl-6-(5-chloro-2H-benzotriazol-2-yl)phenol, 2-(2H-benzotriazol-2-yl)-4,6-di-*tert*-pentylphenol, 2-(2H-benzotriazol-2-yl)-4-(1,1,3,3-tetramethylbutyl)phenol, 1,3-bis[(2'-cyano-3',3'-diphenylacryloyl)oxy]-2,2-bis{[(2'-cyano-3',3'-diphenylacryloyl)oxy]methyl}propane, 2-(2H-benzotriazol-2-yl)-4-methylphenol, 2-(2H-benzotriazol-2-yl)-4,6-bis(1-methyl-1-phenylethyl)phenol, ethyl 2-cyano-3,3-diphenylacrylate, (2-ethylhexyl) 2-cyano-3,3-diphenylacrylate, N,N'-bisformyl-N,N'-bis(2,2,6,6-tetramethyl-4-piperidinyl) hexamethylenediamine, bis(2,2,6,6-tetramethyl-4-piperidyl) sebacate, bis(1,2,2,6,6-pentamethyl-4-piperidyl) sebacate, methyl-(1,2,2,6,6-pentamethyl-4-piperidyl) sebacate, 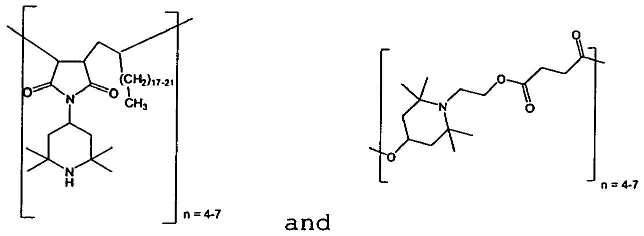 is used as a UV radiation absorbing compound.

8. Sewer pipe restoration system according to any of the preceding claims, **characterized in that** from 0.05 to 20, preferably from 0.1 to 5 wt%, particularly preferably from 0.1 to 2 wt%, of the combination is present, expressed in terms of the total weight of the external protective film.

9. Sewer pipe restoration system according to any of the preceding claims, **characterized in that** the external protective film is multilayered, where the components of the combination are present in different layers, and preferably the colored pigment absorbing and/or reflecting short-wavelength visible light or the dye is present in at least one surface layer of the film, and the organic or inorganic compound absorbing and/or reflecting UV radiation is provided in at least one internal layer, or they are present in the same layer which is preferably at least one of the internal layers.

10. Sewer pipe restoration system according to any of the preceding claims, **characterized in that** the protective film comprises at least one barrier layer, preferably an oxygen barrier layer, water vapor barrier layer or oil barrier layer which is preferably based on at least one polymer selected from the group comprising polyamide, EVOH, polyvinyl alcohol, COC, polyvinylidene chloride and a mixture of at least two of said polymers.

11. Sewer pipe restoration system according to any of the preceding claims, **characterized in that** at least one surface layer, preferably each of the surfaces, of the protective film is based on an olefin homo- or copolymer and the protective film comprises at least one barrier layer, where (in each case) an adhesion promoter layer, preferably consisting of a modified polyolefin, is arranged between the surface layer(s) and the barrier layer.

12. Sewer pipe restoration system according to Claim 11, **characterized in that** the combination is present in the adhesion promoter layer or each of the adhesion promoter layers contains the combination, preferably at least the UV radiation absorbing and/or reflecting compound.

13. Sewer pipe restoration system according to any of the preceding claims, **characterized in that** the colored pigment absorbing and/or reflecting the short-wavelength light, or the corresponding dye, is present in each of the layers with the exception of the barrier layer of a multilayer protective film.

14. Sewer pipe restoration system according to any of the preceding claims, **characterized in that** each component of the combination is stable at temperatures of up to 300°C.

15. Use of an at least contact transparent, single layer or multilayer film absorbing and/or reflecting UV radiation and short-wavelength visible light, comprising at least one layer based on at least one optionally modified thermoplastic olefin homo- or copolymer, comprising a combination of at least one organic or inorganic colored pigment or dye absorbing and/or reflecting short-wavelength visible light, and of at least one organic or inorganic compound absorbing and/or reflecting the UV radiation as a protective film in the form of an externally lying tubular film of a double-walled tube to avoid curing, initiated by UV radiation and/or short-wavelength light, of a reactive synthetic resin packed between the external and internal tubular films, in particular as a protective film in tubular form for the tube lining technique for sewer pipe restoration.

## Revendications

1. Système d'assainissement de conduites approprié pour une technique de garnissage par des flexibles comprenant un flexible à double paroi prévu pour l'introduction dans la conduite à assainir, constitué par une feuille de protection externe sous forme de flexible et une feuille en matériau synthétique interne, multicouche et un matériau support imprégné se trouvant entre les deux feuilles pour flexible, durcissable par un rayonnement UV, de préférence un matériau en fibres de verre imbibé d'un système de résine insaturée, **caractérisé en ce que** la feuille de protection externe en forme de flexible est une feuille monocouche ou multicouche, au moins transparente par contact, absorbant et/ou réfléchissant le rayonnement UV et la lumière visible de courtes longueurs d'onde, comprenant au moins une couche à base d'au moins un homopolymère ou copolymère oléfinique thermoplastique éventuellement modifié, contenant une combinaison d'au moins un pigment coloré ou un colorant organique ou inorganique absorbant et/ou réfléchissant la lumière visible de courtes longueurs d'onde et d'au moins un composé organique ou inorganique absorbant et/ou réfléchissant le rayonnement UV.

2. Système d'assainissement de conduites selon la revendication 1, **caractérisé en ce que** la feuille pour flexible interne, multicouche comprend une couche a) constituée par au moins une polyoléfine, au moins un copolymère oléfinique ou un mélange de polyoléfines, qui entre en contact direct avec le matériau support, une couche de promoteur d'adhérence b), une couche formant une barrière c) à base de polyamide, une autre couche de promoteur d'adhérence d) et une couche e) à base d'au moins un homopolymère ou copolymère oléfinique.

3. Système d'assainissement de conduites selon la revendication 1 ou 2, **caractérisé en ce que** le pigment coloré ou le colorant organique ou inorganique de la feuille de protection externe absorbe et/ou réfléchit la lumière visible de courtes longueurs d'onde de préférence à raison de plus de 90%.

4. Système d'assainissement de conduites selon l'une quelconque des revendications précédentes, **caractérisé en ce que** le pigment coloré ou le colorant organique ou inorganique absorbe et/ou réfléchit la lumière dans la plage de longueurs d'onde de 400 à 500 nm et le composé absorbant et/ou réfléchissant le rayonnement UV de la feuille de protection externe est au moins un composé, qui absorbe et/ou réfléchit la lumière UV dans une plage de longueurs d'onde de 200 à 400 nm, de préférence à raison de plus de 90%.

5. Système d'assainissement de conduites selon l'une quelconque des revendications précédentes, **caractérisé en ce que** le pigment coloré organique ou inorganique est au moins un pigment coloré choisi dans le groupe comprenant les colorants carbonyle, de préférence les quinones, les colorants indigo et les quinacridones, les composants azo, les composés cyanine, de préférence les composés triphénylméthane, les azométhines, les iso-indolines, les dioxazines, les oxydes métalliques, les oxydes de métal de transition, les oxydes métalliques hydratés et les oxydes de métaux de transition hydratés, de préférence un pigment coloré jaune ou un colorant jaune choisi dans ce groupe.

6. Système d'assainissement de conduites selon l'une quelconque des revendications précédentes, **caractérisé en ce que** le composé absorbant et/ou réfléchissant le rayonnement UV est au moins un composé choisi dans le groupe comprenant les oxydes métalliques, les oxydes de métal de transition, les oxydes métalliques hydratés, les oxydes de métal de transition hydratés, les benzophénones, les anthranilates, les salicylates, les dérivés de dibenzoylméthane, les dérivés de l'acide p-aminobenzoïque, les dérivés de l'acide cinnamique (les dérivés de l'acide phénylacrylique), les cyanoacrylates, les dérivés de benzimidazole, les dérivés de benzotriazole, les acrylates de ß,ß'-divinyle, les acrylates d'alkyl-α-cyano-ß,ß'-divinyle, les composés de 1,3,5-triazine et les amines stériquement encombrées.

7. Système d'assainissement de conduites selon l'une quelconque des revendications précédentes, **caractérisé en ce qu'**on utilise comme composé absorbant le rayonnement UV au moins un composé choisi dans le groupe comprenant l'oxyde de zinc, le dioxyde de titane, le p-méthoxycinnamate de 2-éthoxyéthyle, le p-méthoxycinnamate de diéthanolamine, le p-méthoxycinnamate d'octyle, le 2-cyano-3,3-diphénylacrylate de 2-éthylhexyle, le cinnamate de potassium, le 4-méthoxycinnamate de propyle, le 4-méthoxycinnamate d'amyle, l'acide α-cyano-4-méthoxycinnamique ou, selon le cas, l'ester hexylique correspondant, le 4-méthoxycinnamate de cyclohexyle, le p-aminobenzoate de glycéryle, le p-diméthylaminobenzoate d'amyle, le 4-bis(hydroxypropyl)-aminobenzoate d'éthyle, le p-diméthylaminobenzoate d'octyle, l'acide 4-aminobenzoïque éthoxylé, le salicylate d'octyle, le salicylate de triéthanolamine, les sels de l'acide salicylique, le salicylate de 4-isopropylbenzyle, le 2-(4-phénylbenzoyl)benzoate de 2-éthylhexyle, le salicylate d'homomenthyle, la 2-hydroxy-4-méthoxybenzophénone, la 2,4,6-trianilino-(p-carbo-2-éthylhexyloxy)-1,3,5-triazine, l'acide 2-phénylbenzimidazole-5-sulfonique, la 1-(4-tert-butylphényl)-3-(4-méthoxyphényl)propane-1,3-dione, la p-cuményl-3-phénylpropane-1,3-dione, la 1,3-bis(4-méthoxyphényl)propane-1,3-dione, l'anthranilate de menthyle, le N-acétylanthranilate d'homomenthyle, la 2-hydroxy-4-octylbenzophénone, le 6-tert-butyl-2-(5-chloro-2H-benzotriazol-2-yl)-4-méthylphénol, le 2,4-di-tert-butyl-6-(5-chloro-2H-benzotriazol-2-yl)-phénol, le 2-(2H-benzotriazol-2-yl)-4,6-di-tert-pentylphénol, le 2-(2H-benzotriazol-2-yl)-4-(1,1,3,3-tétraméthylbutyl)-phénol, le 1,3-bis-[(2'-cyano-3',3'-diphénylacryloyl)oxy]-2,2-bis-{[(2'-cyano-3',3'-diphénylacryloyl)oxy]méthyl}-propane, le 2-(2H-benzotriazol-2-yl)-4-méthylphénol, le 2-(2H-benzotriazol-2-yl)-4,6-bis(1-méthyl-1-phényléthyl)phénol, le 2-cyano-3,3-diphénylacrylate d'éthyle, le 2-cyano-3,3-diphénylacrylate de 2-éthylhexyle, la N,N'-bisformyl-N,N'-bis-(2,2,6,6-tétraméthyl-4-pipéridinyl)-hexaméthylènediamine, le sébacate de bis-(2,2,6,6-tétraméthyl-4-pipéridyle), le sébacate de bis-(1,2,2,6,6-pentaméthyl-4-pipéridyle), le sébacate de méthyle et de (1,2,2,6,6-pentaméthyl-4-pipéridyle),

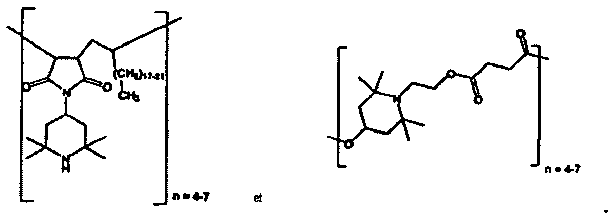

8. Système d'assainissement de conduites selon l'une quelconque des revendications précédentes, **caractérisé en ce qu'**il contient 0,05 à 20% en poids, de préférence 0,1 à 5% en poids, de manière particulièrement préférée 0,1 à 2% en poids, de la combinaison par rapport au poids total de la feuille de protection externe.

9. Système d'assainissement de conduites selon l'une quelconque des revendications précédentes, **caractérisé en ce que** la feuille de protection externe est à plusieurs couches, les composants de la combinaison se trouvant dans différentes couches, de préférence le pigment coloré ou le colorant absorbant et/ou réfléchissant la lumière visible de courtes longueurs d'onde dans au moins une couche de surface de la feuille et le composé organique ou inorganique, absorbant et/ou réfléchissant le rayonnement UV dans au moins une couche interne, ou dans la même couche, qui est de préférence au moins une des couches internes.

10. Système d'assainissement de conduites selon l'une quelconque des revendications précédentes, **caractérisé en ce que** la feuille de protection comprend au moins une couche formant une barrière, de préférence une couche formant une barrière contre l'oxygène, la vapeur d'eau ou l'huile, qui est de préférence à base d'au moins un polymère choisi dans le groupe comprenant le polyamide, l'EVOH, le poly(alcool vinylique), le COC, le poly(chlorure de vinylidène) et un mélange d'au moins deux des polymères mentionnés.

11. Système d'assainissement de conduites selon l'une quelconque des revendications précédentes, **caractérisé en ce qu'**au moins une couche de surface, de préférence chacune des surfaces comprend la feuille de protection à base d'un homopolymère ou d'un copolymère oléfinique et la feuille de protection comprend au moins une couche formant une barrière, une couche de promoteur d'adhérence, de préférence en polyoléfine modifiée, étant disposée (à chaque fois) entre la (ou les) couche(s) de surface et la couche formant une barrière.

12. Système d'assainissement de conduites selon la revendication 11, **caractérisé en ce que** la combinaison se trouve dans la couche de promoteur d'adhérence ou chacune des couches de promoteur d'adhérence contient la combinaison, de préférence au moins le composé absorbant et/ou réfléchissant le rayonnement UV.

13. Système d'assainissement de conduites selon l'une quelconque des revendications précédentes, **caractérisé en ce que** le pigment coloré absorbant et/ou réfléchissant la lumière de courtes longueurs d'onde ou le colorant correspondant se trouve dans chacune des couches, à l'exception de la couche formant une barrière d'une feuille de protection multicouche.

14. Système d'assainissement de conduites selon l'une quelconque des revendications précédentes, **caractérisé en ce que** chaque composant de la combinaison est stable aux températures jusqu'à 300°C.

15. Utilisation d'une feuille monocouche ou multicouche, au moins transparente par contact, absorbant et/ou réfléchissant le rayonnement UV et la lumière visible de courtes longueurs d'onde, comprenant au moins une couche à base d'au moins un homopolymère ou copolymère oléfinique thermoplastique éventuellement modifié, contenant une combinaison d'au moins un pigment coloré ou un colorant organique ou inorganique absorbant et/ou réfléchissant la lumière visible de courtes longueurs d'onde et d'au moins un composé organique ou inorganique absorbant et/ou réfléchissant le rayonnement UV,
comme feuille de protection sous forme d'une feuille pour flexible externe d'un flexible à double paroi pour éviter le durcissement déclenché par le rayonnement UV et/ou la lumière de courtes longueurs d'onde d'une résine de matériau synthétique réactive, enserrée entre la feuille de flexible externe et interne,
en particulier comme feuille de protection en forme de flexible lors de la technique de garnissage par des flexibles pour l'assainissement de conduites.
